# EUROPÄISCHE PATENTSCHRIFT

(11) **EP 2 134 799 B1**
(45) Veröffentlichungstag und Bekanntmachung des Hinweises auf die Patenterteilung: **22.02.2012**
(21) Anmeldenummer: 07858033.9
(22) Anmeldetag: 21.12.2007
(51) Int. Cl.: C09J 5/06, B62D 27/02

(54) **BÖRDELFALZVERKLEBUNG**
EDGING-FOLD BOND
COLLAGE DE PLIS DE FLASQUES

(30) Priorität: 21.12.2006 EP 06126790; 22.08.2007 CH 13112007
(43) Veröffentlichungstag der Anmeldung: 23.12.2009
(73) Patentinhaber: Sika Technology AG, 6340 Baar (CH)
(72) Erfinder: SCHULENBURG, Jan Olaf, CH-8037 Zürich (CH); GUTGSELL, Michael, CH-8606 Greifensee (CH); MAURER, Yolanda, CH-8803 Rueschlikon (CH)
(74) Vertreter: Sika Patent Attorneys
(86) Internationale Anmeldenummer: PCT/EP2007/064417
(87) Internationale Veröffentlichungsnummer: WO 2008/077918

(56) Entgegenhaltungen:
- EP-A- 1 041 130
- DE-A1- 3 540 520
- US-A- 5 487 803

## Beschreibung

### Technisches Gebiet

Die Erfindung betrifft das Gebiet der Bördelfalzverklebungen.

### Stand der Technik

Bördelfalzverklebungen werden schon seit langem in der industriellen Fertigung verwendet. Es ist bekannt Transportmittelteile, wie Türen, Kofferraumhauben, Rückwandklappen Motorraumhauben und dergleichen aus einem Aussenblech und einem Innenblech mittels Falzverbindung herzustellen. Um eine Fixierung des Falzes zu gewährleisten wird hierbei ein Klebstoff verwendet, welcher das Innenblech mit dem Aussenblech verbindet. Fertigungstechnisch ist es ist jedoch unmöglich, den Bördelfalz vollständig mit Klebstoff zu verfüllen. Dies ist insbesondere darauf zurückzuführen, da nach der Druckentlastung bei der Bördelung aufgrund der elastischen Eigenschaften des Bleches die Bördelfalznaht sich wieder leicht öffnet. Dadurch entstehen Hohlräume, welche Probleme optischer Natur, wie auch in Bezug auf Korrosion der Bleche, sind. Es sind deshalb einige Vorschläge gemacht worden, den Prozess der Bördelfalzverklebung optimaler zu gestalten.

DE-A-32 38 651 offenbart einen Auftrag einer Dichtungsmasse, welche zuerst in einer ersten Wärmebehandlung von der Seite der Dichtungsmasse her geliert bzw. ausgehärtet wird und erst anschliessend mittels einer zweiten Wärmebehandlung durch induktive Aufheizung die Gelierung des Klebstoffs in der Bördelnaht erfolgt. Dies ist jedoch nachteilig, da eingeschlossene Luft in den Innenraum zwischen Innen- und Aussenblech gelangen. In diesen Hohlräumen kann jedoch Korrosion erfolgen.

EP-A-0 254 870 versucht, dieses Problem zu lösen, indem sie das Bauteil mit seiner Bördelnaht auf die Gelierungstemperatur erhitzt und erst dann die Versiegelungsmasse aufträgt. Dieses Verfahren hat jedoch den Nachteil, dass aufgrund der breitflächigen Erwärmung das Bauteil stark verzogen werden kann und beim Abkühlen zu Rissen in der Versieglungsmasse oder des Klebstoffs im Bördelspalt erfolgen können.

DE-A-101 09 551 versucht, dieses Problem zu lösen, indem sie vorschlägt, nicht das gesamte Bauteil auf die Geliertemperatur aufzuheizen, sondern die Erwärmung lokal und möglichst unmittelbar vor dem Auftrag der Versiegelungsmasse durchzuführen. Diese vorgeschlagene Lösung bedingt jedoch eine apparativ sehr aufwändige Installation und birgt einige Schwächen in sich. Die Bildung von Blasen im Klebstoff wird durch diesen Prozess aber nicht verhindert und durch die lokale Erhitzung bedingt, sind Risse in der Versiegelungsmasse bzw. des Klebstoffes ebenfalls nicht ausgeschlossen, so dass trotz des Anbringens einer Versiegelungsschicht nicht verhindert werden kann, dass korrosive Medien in den Falzspalt und die Falzkante gelangen können.

DE 35 40 520 A1 beschreibt ein Verfahren zur Bördelfalz verklebung, in dem die Viskosität des Dichstoffs auf der Falzkante so eigestellt wird, dass sich bei der Wärmbehandlung keine Blasen bilden.

### Darstellung der Erfindung

Die Aufgabe der vorliegenden Erfindung ist es daher, ein Verfahren zur Bördelfalzverklebung zur Verfügung zu stellen, welches insbesondere die Bildung von Blasen und Rissen im Bördelfalzklebstoff verhindert oder zumindest stark reduziert und dadurch auch die Bildung von Blasen in einer gegebenenfalls vorhandenen Versiegelung oder Abdichtung teilweise oder vollständig verhindert.

Überraschenderweise wurde gefunden, dass diese Aufgabe durch das Verfahren gemäss Anspruch 1 gelöst werden kann. Dies ist insbesondere dadurch ermöglicht, dass ein hochviskoser Klebstoff verwendet wird. Dadurch wird verhindert, dass sich bei der Druckentlastung nach der Bördelung Blasen oder Risse bilden. Zudem kann in einer bevorzugten Ausführungsform durch die Verwendung von Abstandhalter die Klebstoffschichtdicke optimal eingestellt werden und insbesondere bei der Rückfederung des Aussenbleches bei der Bördelung eine optimalere Befüllung des Bördelfalzes bewerkstelligen. Als besonders geeignete Klebstoffe zeigten sich hitzehärtende Epoxidharzklebstoffe. In einer besonders vorteilhaften Ausführungsform enthalten derartige hitzehärtende Epoxidharzklebstoffe spezifische Schlagzähigkeitsmodifikatoren, so dass die Bördelfalzverklebung qualitativ noch erhöht wird und insbesondere gegen Schlageinwirkungen verbessert wird.

In einer bevorzugten Ausführungsform der Erfindung kann die Aushärtung des Bördelfalzklebstoffes und des die Bördelfalznaht abdeckenden Dichtstoffes gleichzeitig erfolgen, wodurch Prozessschritte eingespart werden können und das Verfahren vereinfacht wird.

In einem weiteren Aspekt betrifft die Erfindung eine nach diesem Verfahren hergestellte Bördelfalzverklebung, sowie ein Bördelfalz-Klebverbundkörper nach Anspruch 18 sowie die Verwendung des genannten Verfahrens gemäss Anspruch 17 zur Herstellung von Transportmitteln oder Weisswaren.

Bevorzugte Ausführungen der Erfindung sind Gegenstand der abhängigen Ansprüche.

### Wege zur Ausführung der Erfindung

Die vorliegende Erfindung betrifft in einem ersten Aspekt ein Verfahren zur Herstellung einer Bördelfalzverklebung. Dieses umfasst mindestens die Schritte
a) Applikation eines Klebstoffes,
   welcher bei 25°C eine Viskosität von > 900 Pas aufweist,
   auf ein Innenblech oder auf ein Aussenblech;
b) Kontaktieren des Klebstoffes mit dem Innenblech oder dem Aussenblech;
c) Bördeln des Aussenbleches um das Innenblech, so dass im Innenraum des Bördelfalzes Klebstoff vorhanden ist;
d) Verpressen des Bördelfalzes;
e) Einführen thermischer Energie in den Klebstoff.

Der Klebstoff kann einkomponentig oder zweikomponentig sein.

Als zweikomponentiger Klebstoff eignen sich insbesondere bei Raumtemperatur härtende oder vorverhärtende zweikomponentige Epoxidharzklebstoffe oder Polyurethanklebstoffe oder (Meth)acrylatklebstoffe. Als bei Raumtemperatur vorverhärtenden zweikomponentige Epoxidharzklebstoffe oder Polyurethanklebstoffe oder (Meth)acrylatklebstoffe werden Epoxidharzklebstoffe oder Polyurethanklebstoffe oder (Meth)acrylatklebstoffe verstanden, welche aus zwei Komponenten bestehen, bei deren Mischung eine Reaktion zwischen den Komponenten entsteht, und dadurch zumindest einen gewissen Grad an Vernetzung ("vorverhärtet" oder "vorvernetzt") erreichen. Derartige Klebstoffe sind in der Lage in einem weiteren Härtungsschritt zum Beispiel bei erhöhter Temperatur weiter zu reagieren. Vielfach weisen derartige Klebstoffe in der ersten Stufe eine sogenannte Vorhärtung, bzw. Vorgelierung, auf und bei erhöhter Temperatur eine hitzehärtende Reaktionsstufe auf.

Zweikomponentige Epoxidharzklebstoffe weisen eine Harzkomponente auf, welche einen Glycidylether, insbesondere einen Diglycidylether von Bisphenol-A und/oder Bisphenol-F enthält. Weiterhin weisen sie eine Härterkomponte auf, welche Polyamine und/oder Polymerkaptane enthalten. Derartige zweikomponentige Epoxidharzklebstoffe härten bei Raumtemperatur nach Mischen der zwei Komponenten rasch aus und sind dem Fachmann bekannt.

Zweikomponentige Polyurethanklebstoffe weisen in einer Komponente Polyisocyanate, insbesondre in Form von Isocyanat-Gruppen aufweisenden Prepolymeren, auf und in einer zweiten Komponente Polyole und/oder Polyamine auf. Derartige zweikomponentige Polyurethanklebstoffe härten bei Raumtemperatur nach Mischen der zwei Komponenten rasch aus und sind dem Fachmann bekannt.

Zweikomponentige (Meth)acrylatklebstoffe weisen in einer Komponente Acrylsäure und/oder Methacrylsäure und/oder deren Ester auf. Die zweite Komponente weist einen Radikalbildner, insbesondere ein Peroxid, auf. Derartige zweikomponentige (Meth)acrylatklebstoffe härten bei Raumtemperatur nach Mischen der zwei Komponenten rasch aus und sind dem Fachmann bekannt.

Bei Raumtemperatur härtende zweikomponentige Klebstoffen können auch unter Wärmeinfluss ausgehärtet werden. Dies führt zu einer schnelleren Reaktion und damit zu einer Verkürzung der Zeitspanne bis eine damit erstellte Verklebung mit Kräften belastet werden kann. Weiterhin führt eine Wärmebehandlung von derartigen bei Raumtemperatur härtenden zweikomponentigen Klebstoffen zu höheren Festigkeiten, verglichen mit solchen, welche keine derartige Wärmebehandlung erfahren.

Als Klebstoffe kommen andererseits einkomponentige hitzehärtende einkomponentige Epoxidharzklebstoffe i n F ra g e. Derartige hitzehärtende einkomponentige Epoxidharzklebstoffe enthalten mindestens ein Epoxidharz und mindestens einen wärmeaktivierbaren Katalysator oder einen Härter B für Epoxidharze, welcher durch erhöhte Temperatur aktiviert wird. Besonders bevorzugt sind geeignete hitzehärtende einkomponentige Epoxidharzklebstoffe, wie sie in der Produktelinie SikaPower® von Sika Automotive GmbH kommerziell erhältlich sind.

Bei Erhitzung eines derartigen einkomponentigen hitzehärtenden einkomponentigen Epoxidharzklebstoffes erfolgt eine Vernetzung. Die Erhitzung erfolgt bei typischerweise bei einer Temperatur von über 70°C.

In einer bevorzugten Ausführungsform ist der Klebstoff ein hitzehärtender einkomponentiger Epoxidharzklebstoff, welcher
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein endständig blockiertes Polyurethanprepolymer der Formel (I) umfasst.

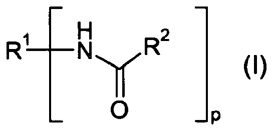

Hierbei steht R¹ für einen p-wertigen Rest eines mit Isocyanatgruppen terminierten linearen oder verzweigten Polyurethanprepolymers **PU1** nach dem Entfernen der endständigen Isocyanatgruppen und p für einen Wert von 2 bis 8.

Weiterhin stehen R² unabhängig voneinander für einen Substituenten, welcher ausgewählt ist aus der Gruppe bestehend aus

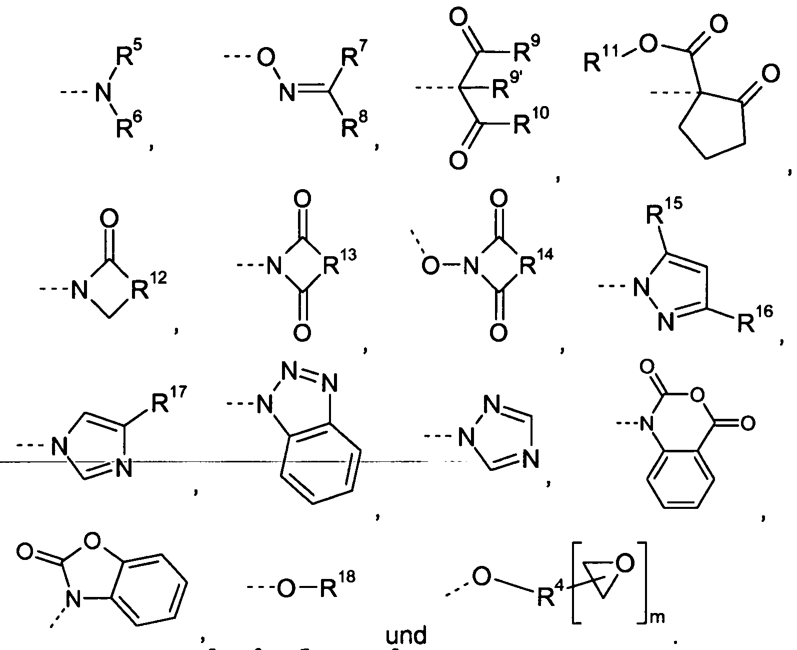

Hierbei steht R⁵, R⁶, R⁷ und R⁸ je unabhängig voneinander für eine Alkyl- oder Cycloalkyl- oder Aralkyl- oder Arylalkyl-Gruppe, oder R⁵ bildet zusammen mit R⁶, oder R⁷ zusammen mit R⁸, einen Teil eines 4- bis 7-gliedrigen Rings bilden, welcher allenfalls substituiert ist.

Weiterhin stehen R^{9'} und R¹⁰ je unabhängig voneinander für eine Alkyl-oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe.

R¹⁵, R¹⁶ und R¹⁷ stehen je unabhängig voneinander für H oder für eine Alkylgruppe oder für eine Arylgruppe oder eine Aralkylgruppe und R¹⁸ steht für eine Aralkylgruppe oder für eine ein- oder mehrkernige substituierte oder unsubstituierte Aromatengruppe, welche gegebenenfalls aromatische Hydroxylgruppen aufweist.

Schliesslich steht R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen und m für einen Wert von 1, 2 oder 3.

Der Term "unabhängig voneinander" ist in diesem Dokument dahin gehend auszulegen, dass in demselben Molekül die gleich bezeichneten Substituenten, Resten oder Gruppen gleichzeitig mit unterschiedlicher Bedeutung auftreten können. Dies führt dazu, dass zum Beispiel in Formel (I) von den p Reste R² nicht alle denselben Rest darstellen müssen, sondern sie können, im Rahmen der Definition von R² mögliche, unterschiedliche Bedeutungen aufweisen. So ist es im Extremfall möglich, dass das endständig blockierte Polyurethanprepolymer der Formel (I) 8 voneinander verschiedene Reste R² aufweisen kann.

Die gestrichelten Linien in den Formeln dieses Dokumentes stellen jeweils die Bindung zwischen dem jeweiligen Substituenten und dem dazugehörigen Molekülrest dar.

Als R¹⁸ sind insbesondere einerseits Phenole oder Polyphenole, insbesondere Bisphenole, nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Die Reste R² sind vorzugsweise die Substituenten der Formeln

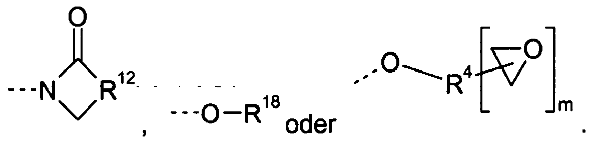

Als Substituent der Formel 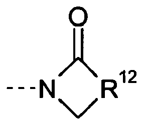 ist ε-Caprolactam nach Entfernung des NH-Protons bevorzugt.

Als Substituent der Formel ---O-R¹⁸ sind Monophenole oder Polyphenole, insbesondere Bisphenole, nach Entfernung eines phenolischen Wasserstoffatoms bevorzugt Besonders bevorzugte Bespiele für derartigen Reste R² sind Reste, welche ausgewählt sind aus der Gruppe bestehend aus

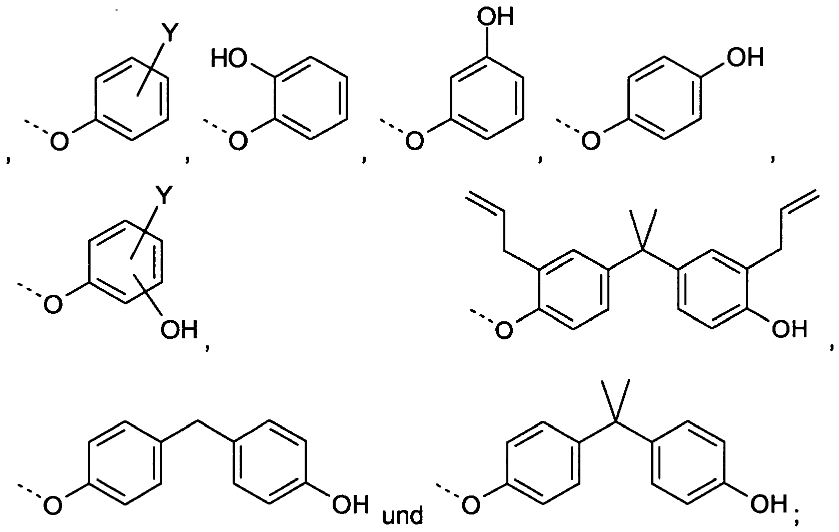

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

Meist bevorzugt steht R² für

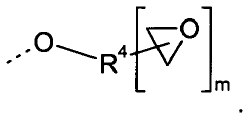

Die Herstellung des endständig blockierten Polyurethanprepolymers der Formel (I) erfolgt aus dem Isocyanatgruppen terminierten linearen oder verzweigten Polyurethanprepolymeren **PU1** mit einer oder mehreren Isocyanat-reaktiven Verbindungen R²H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt derart, dass die eine oder die mehreren Isocyanat-reaktiven Verbindungen R²H stöchiometrisch oder im stöchiometrischen Überschuss eingesetzt werden, um zu gewährleisten, dass alle NCO-Gruppen umgesetzt sind.

Das Polyurethanprepolymer **PU1**, auf dem R¹ basiert, lässt sich aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** herstellen.

In der gesamten hier vorliegenden Schrift werden mit der Vorsilbe "Poly" in "Polyisocyanat", "Polyol", "Polyphenol" und "Polymerkaptan" Moleküle bezeichnet, die formal zwei oder mehr der jeweiligen funktionellen Gruppen enthalten.

Geeignete Diisocyanate sind aliphatische, cycloaliphatische, aromatische oder araliphatische Diisocyanate, insbesondere handelsübliche Produkte wie Methylendiphenyldiisocyanat (MDI), Hexamethylendiisocyanat (HDI), Toluoldiisocyanat (TDI), Tolidindiisocyanat (TODI), Isophorondiisocyanat (IPDI), Trimethylhexamethylendiisocyanat (TMDI), 2,5- oder 2,6-Bis-(isocyanatomethyl)-bicyclo[2.2.1]heptan, 1,5-Naphthalindiisocyanat (NDI), Dicyclohexylmethyldiisocyanat (H₁₂MDI), p-Phenylendiisocyanat (PPDI), m-Tetramethylxylylen diisocyanat (TMXDI), etc. sowie deren Dimere. Bevorzugt sind HDI, IPDI, MDI oder TDI.

Geeignete Triisocyanate sind Trimere oder Biurete von aliphatischen, cycloaliphatischen, aromatischen oder araliphatischen Diisocyanaten, insbesondere die Isocyanurate und Biurete der im vorherigen Absatz beschriebenen Diisocyanate.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere geeignet Polymere **Q_{PM}** mit zwei oder drei endständigen Amino-, Thiol- oder Hydroxylgruppen.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** geeignet sind Polyole, beispielsweise die folgenden handelsüblichen Polyole oder beliebige Mischungen davon:
- Polyoxyalkylenpolyole, auch Polyetherpolyole genannt, welche das Polymerisationsprodukt von Ethylenoxid, 1,2-Propylenoxid, 1,2- oder 2,3-Butylenoxid, Tetrahydrofuran oder Mischungen davon sind, gegebenenfalls polymerisiert mit Hilfe eines Startermoleküls mit zwei oder drei aktiven H-Atomen wie beispielsweise Wasser oder Verbindungen mit zwei oder drei OH-Gruppen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex Katalysatoren (kurz DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH oder Alkalialkoholaten. Besonders geeignet sind Polyoxypropylendiole und -triole mit einem Ungesättigtheitsgrad tiefer als 0.02 mEq/g und mit einem Molekulargewicht im Bereich von 1000 - 30'000 Dalton, Polyoxybutylendiole und -triole, Polyoxypropylendiole und -triole mit einem Molekulargewicht von 400 - 8'000 Dalton, sowie sogenannte "EO-endcapped" (ethylene oxide-endcapped) Polyoxypropylendiole oder -triole. Letztere sind spezielle Polyoxypropylenpolyoxyethylenpolyole, die beispielsweise dadurch erhalten werden, dass reine Polyoxypropylenpolyole nach Abschluss der Polypropoxylierung mit Ethylenoxid alkoxyliert werden und dadurch primäre Hydroxylgruppen aufweisen.

- Hydroxyterminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte;
- Styrol-Acrylnitril gepfropfte Polyetherpolyole, wie sie beispielsweise von Elastogran unter dem Namen Lupranol® geliefert werden;
- Polyhydroxyterminierte Acrylnitril/Butadien-Copolymere, wie sie beispielsweise aus carboxylterminierten Acrylnitril/Butadien-Copolymeren (kommerziell erhältlich unter dem Namen Hycar® CTBN von Nanoresins AG, Deutschland) und Epoxiden oder Aminoalkoholen hergestellt werden können;
- Polyesterpolyole, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Korksäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton;
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.

Vorteilhaft sind die Polymere **Q_{PM}** di- oder höherfunktioneller Polyole mit OH-Equivalentsgewichten von 300 bis 6000 g/OH-Equivalent, insbesondere von 600 bis 4000 g/OH-Equivalent, vorzugsweise 700 - 2200 g/OH-Equivalent. Weiterhin vorteilhaft sind die Polyole ausgewählt aus der Gruppe bestehend aus Polyethylenglycolen, Polypropylenglycolen, Polyethylenglycol-Polypropylenglycol-Block-Co-polymeren, Polybutylenglycolen, hydroxylterminierten Polybutadienen, hydroxylterminierten Butadien/Acrylnitril-Copolymeren, hydroxylterminierten synthetischen Kautschuken, deren Hydrierungsprodukten und Gemischen dieser genannten Polyole.

Im Weiteren können als Polymere **Q_{PM}** auch di- oder höherfunktionelle aminoterminierte Polyethylenether, Polypropylenether, wie sie zum Beispiel unter dem Namen Jeffamine® von Huntsman vertrieben werden, Polybutylenether, Polybutadiene, Butadien/Acrylnitril-Copolymere, wie sie zum Beispiel die unter dem Namen Hycar® ATBN von Nanoresins AG, Deutschland vertrieben werden, sowie weitere aminoterminierte synthetische Kautschuke oder Gemische der genannte Komponenten verwendet werden.

Für gewisse Anwendungen sind als Polymere **Q_{PM}** insbesondere Hydroxyl-Gruppen aufweisende Polybutadiene oder Polyisoprene oder deren partiell oder vollständig hydrierte Reaktionsprodukte geeignet.

Es ist weiterhin möglich, dass die Polymere **Q_{PM}** auch kettenverlängert sein können, wie es in dem Fachmann bekannter Art und Weise durch die Reaktion von Polyaminen, Polyolen und Polyisocyanaten, insbesondere von Diaminen, Diolen und Diisocyanaten, durchgeführt werden kann.

Am Beispiel eines Diisocyanates und eines Diols bildet sich daraus, wie im Folgenden gezeigt, je nach gewählter Stöchiometrie eine Spezies der Formel (VI) oder (VII) 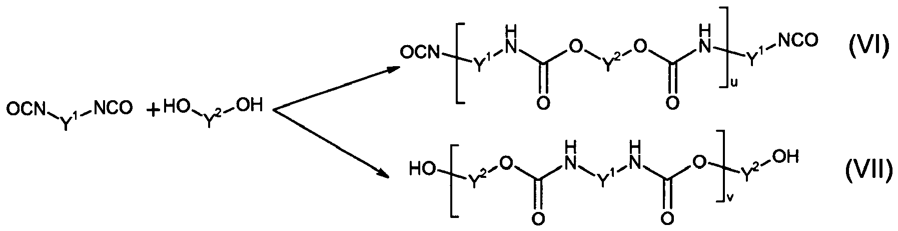 Die Reste Y¹ und Y² stellen einen divalenten organischen Rest dar und die Indizes u und v variieren je nach Stöchiometrieverhältnis von 1 bis typischerweise 5.

Diese Spezies der Formel (VI) oder (VII) können dann wiederum weiterreagiert werden. So kann beispielsweise aus der Spezies der Formel (VI) und einem Diol mit einem divalenten organischen Rest Y³ ein kettenverlängertes Polyurethanprepolymer PU1 der folgenden Formel gebildet werden:

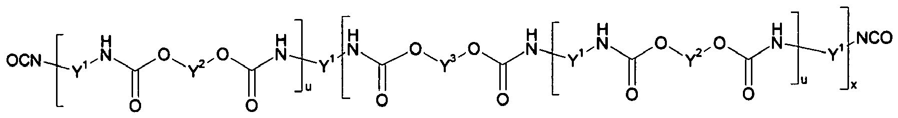

Aus der Spezies der Formel (VII) und einem Diisocyanat mit einem divalenten organischen Rest Y⁴ kann ein kettenverlängertes Polyurethanprepolymer PU1 der folgenden Formel gebildet werden:

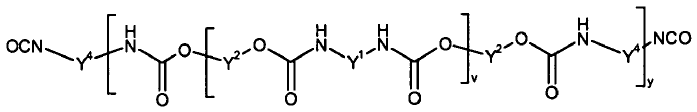

Die Indizes x und y variieren je nach Stöchiometrieverhältnis von 1 bis typischerweise 5, und sind insbesondere 1 oder 2.

Weiterhin kann auch die Spezies der Formel (VI) mit der Spezies der Formel (VII) umgesetzt werden, so dass ein NCO Gruppen aufweisendes kettenverlängertes Polyurethanprepolymer **PU1** entsteht.

Für die Kettenverlängerung werden insbesondere Diole und/oder Diamine und Diisocyanate bevorzugt. Selbstverständlich ist dem Fachmann klar, dass auch höherfunktionelle Polyole, wie beispielsweise Trimethylolpropan oder Pentaerythrit, oder höherfunktionelle Polyisocyanate, wie Isocyanurate von Diisocyanaten, für die Kettenverlängerung verwendet werden können.

Bei den Polyurethanprepolymeren **PU1** generell und bei den kettenverlängerten Polyurethanprepolymeren im Speziellen ist vorteilhaft darauf zu achten, dass die Prepolymere nicht zu hohe Viskositäten aufweisen, insbesondere wenn höher funktionelle Verbindungen für die Kettenverlängerung eingesetzt werden, denn dies kann deren Umsetzung zu den Polyurethanprepolymeren der Formel (I) beziehungsweise die Applikation des Klebstoffs erschweren.

Als Polymere **Q_{PM}** bevorzugt sind Polyole mit Molekulargewichten zwischen 600 und 6000 Dalton ausgewählt aus der Gruppe bestehend aus Polyethylenglykolen, Polypropylenglykolen, Polyethylenglykol-Polypropylenglykol-Blockpolymeren, Polybutylenglykolen, hydroxylterminierte Polybutadiene, hydroxylterminierte Butadien-Acrylnitril-Copolymere sowie deren Gemische.

Als Polymere **Q_{PM}** sind insbesondere bevorzugt α,ω-Dihydroxypolyalkylenglykole mit C₂-C₆-Alkylengruppen oder mit gemischten C₂-C₆- Alkylengruppen, die mit Amino-, Thiol- oder, bevorzugt, Hydroxylgruppen terminiert sind. Besonders bevorzugt sind Polypropylenglykole oder Polybutylenglykole. Weiterhin besonders bevorzugt sind Hydroxylgruppen-terminierte Polyoxybutylene.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Durch die Art und Stellung eines solchen Substituenten wird unter anderem die für die Bildung des Polyurethanprepolymeren **PU1** nötige Reaktion mit Isocyanaten beeinflusst.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), B i s (4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methanoindan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol-oder Kresolnovolacke mit -OH-Funktionalität von 2.0 bis 3.5 sowie alle Isomeren der vorgenannten Verbindungen.

Bevorzugte Diphenole und Dikresole hergestellt durch Umsetzung von Phenolen oder Kresolen mit Di-isopropylidenbenzol weisen eine chemische Strukturformel auf, wie sie entsprechend für Kresol als Bespiel nachfolgend gezeigt ist:

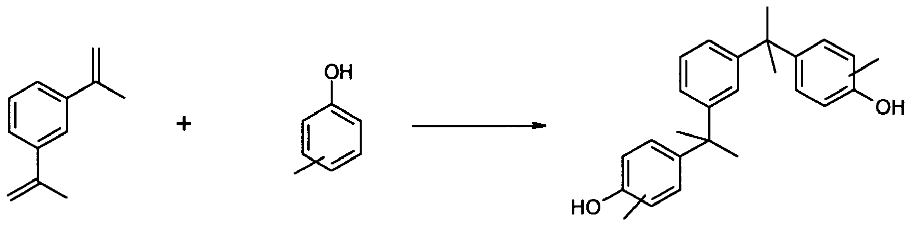

Besonders bevorzugt sind schwerflüchtige Bisphenole. Als meist bevorzugt gelten Bisphenol-M, Bisphenol-S und 2,2'-Diallyl-Bisphenol-A.

Bevorzugt weist das **Q_{PP}** 2 oder 3 phenolische Gruppen auf.

In einer ersten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen hergestellt. Die Herstellung des Polyurethanprepolymers **PU1** erfolgt in einer dem Polyurethan-Fachmann bekannten Art und Weise, insbesondere, indem das Diisocyanat oder Triisocyanat in einem stöchiometrischen Überschuss in Bezug auf die Amino-, Thiol- oder Hydroxylgruppen des Polymeren **Q_{PM}** eingesetzt wird.

In einer zweiten Ausführungsform wird das Polyurethanprepolymer **PU1** aus mindestens einem Diisocyanat oder Triisocyanat sowie aus einem, gegebenenfalls substituierten, Polyphenol **Q_{PP}** hergestellt. Die Herstellung des Polyurethanprepolymers **PU1** erfolgt in einer dem Polyurethan-Fachmann bekannter Art und Weise, insbesondere indem das Diisocyanat oder Triisocyanat in einem stöchiometrischen Überschuss in Bezug auf die phenolischen Gruppen des Polyphenols **Q_{PP}** eingesetzt wird.

In einer dritten Ausführungsform wird das Polyurethanprepolymer **PU1** aus mindestens einem Diisocyanat oder Triisocyanat sowie aus einem Polymeren **Q_{PM}** mit endständigen Amino-, Thiol- oder Hydroxylgruppen sowie aus einem, gegebenenfalls substituierten, Polyphenol **Q_{PP}** hergestellt. Zur Herstellung des Polyurethanprepolymers **PU1** aus mindestens einem Diisocyanat oder Triisocyanat sowie aus einem Polymeren **Q_{PM}** mit endständigen Amino-, Thiol- oder Hydroxylgruppen und / oder aus einem, gegebenenfalls substituierten, Polyphenol **Q_{PP}** stehen unterschiedliche Möglichkeiten zur Verfügung.

In einem ersten Verfahren, "Eintopfverfahren" genannt, wird eine Mischung von mindestens einem Polyphenol **Q_{PP}** und mindestens einem Polymeren **Q_{PM}** mit mindestens einem Diisocyanat oder Triisocyanat in einem Isocyanatüberschuss umgesetzt.

In einem zweiten Verfahren, "2-Schrittverfahren I" genannt, wird mindestens ein Polyphenol **Q_{PP}** mit mindestens einem Diisocyanat oder Triisocyanat in einem Isocyanatüberschuss und anschliessend mit mindestens einem Polymeren **Q_{PM}** in Unterschuss umgesetzt.

Im dritten Verfahren schliesslich, "2-Schrittverfahren II" genannt, wird mindestens ein Polymer **Q_{PM}** mit mindestens einem Diisocyanat oder Triisocyanat in einem Isocyanatüberschuss und anschliessend mit mindestens einem Polyphenol **Q_{PP}** in Unterschuss umgesetzt.

Die drei Verfahren führen zu Isocyanat-terminierten Polyurethanprepolymeren **PU1**, die sich bei gleicher Zusammensetzung in der Sequenz ihrer Bausteine unterscheiden können. Es sind alle drei Verfahren geeignet, jedoch ist das "2-Schrittverfahren II" bevorzugt.

Werden die beschriebenen Isocyanat-endständigen Polyurethanprepolymeren **PU1** aus difunktionellen Komponenten aufgebaut, zeigte sich, dass das Equivalenz-Verhältnis Polymer **Q_{PM}**/Polyphenol **Q_{PP}** bevorzugt grösser als 1.50 und das Equivalenz-Verhältnis Polyisocyanat/(Polyphenol **Q_{PP}** + Polymer **Q_{PM}**) bevorzugt grösser als 1.20 ist.

Wird die durchschnittliche Funktionalität der verwendeten Komponenten grösser als 2, so erfolgt eine raschere Molekulargewichtserhöhung als im rein difunktionellen Fall. Für den Fachmann ist klar, dass die Grenzen der möglichen Equivalenz-Verhältnisse stark davon abhängen, ob entweder das gewählte Polymer **Q_{PM}**, das Polyphenol **Q_{PP}**, das Polyisocyanat oder mehrere der genannten Komponenten eine Funktionalität >2 besitzen. Je nach dem können unterschiedliche Equivalenz-Verhältnisse eingestellt werden, deren Grenzen durch die Viskosität der resultierenden Polymere bestimmt wird und die experimentell von Fall zu Fall bestimmt werden müssen.

Das Polyurethanprepolymer **PU1** weist bevorzugt elastischen Charakter auf und zeigt eine Glasumwandlungstemperatur Tg von kleiner als 0°C.

Als besonders bevorzugte Isocyanat-reaktive Verbindungen R²H gilt die Monohydroxyl-Epoxidverbindung der Formel (V).

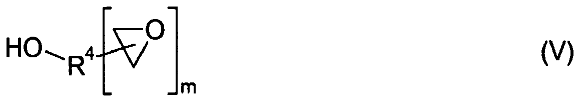

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (V) weist 1, 2 oder 3 Epoxidgruppen auf. Die Hydroxylgruppe dieser Monohydroxyl-Epoxidverbindung (V) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IX), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IX), die bei der Reaktion von Bisphenol-F (R = H) oder des Gemisches von Bisphenol-A und Bisphenol-F mit Epichlorhydrin gebildet werden.

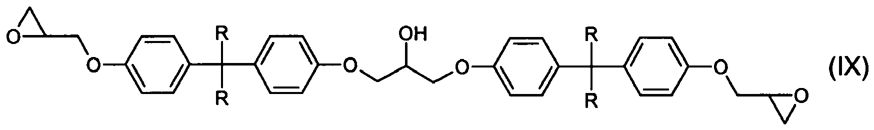

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest R⁴ ist insbesondere bevorzugt ein dreiwertiger Rest der Formel 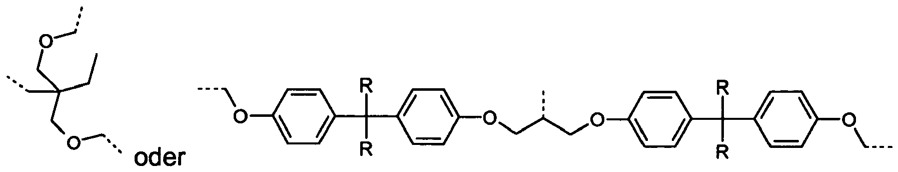 wobei R für Methyl oder H steht.

Die freie primäre oder sekundäre OH-Funktionalität der Monohydroxyl-Epoxidverbindung der Formel (V) lässt eine effiziente Umsetzung mit terminalen Isocyanatgruppen von Prepolymeren zu, ohne dafür unverhältnismässige Überschüsse der Epoxidkomponente einsetzen zu müssen.

De Menge des endständig blockierten Polyurethanprepolymers der Formel (I) beträgt vorteilhaft zwischen 1 und 45 Gewichts-%, insbesondere zwischen 3 und 35 Gewichts-%, bezogen auf das Gesamtgewicht des hitzehärtenden Epoxidharzklebstoffs.

Der hitzehärtende einkomponentige Epoxidharzklebstoff, enthält mindestens ein Epoxidharz **A** mit durchschnittlich mehr als einer Epoxidgruppe pro Molekül. Die Epoxidgruppe liegt vorzugsweise als Glycidylethergruppe vor. Das Epoxidharz **A** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.

Bevorzugte Epoxid-Festharze weisen die Formel (X) auf

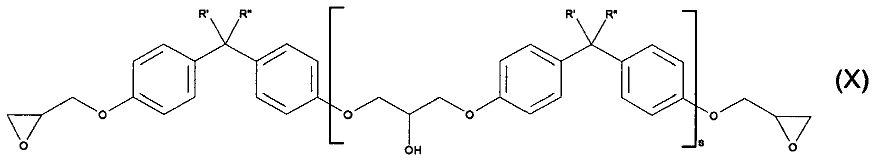

Hierbei stehen die Substituenten R' und R" unabhängig voneinander entweder für H oder CH₃.

Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d.h. wo der Index s einen Wert von > 1.5 aufweist.

Bevorzugte Epoxid-Flüssigharze weisen die Formel (XI) auf

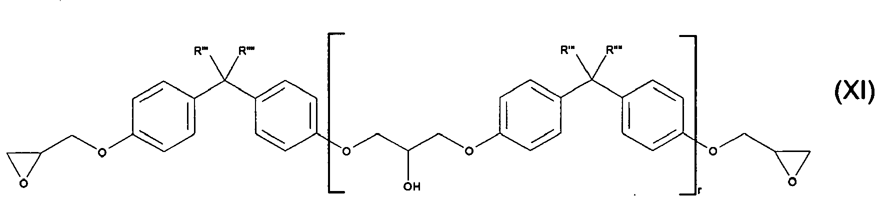

Hierbei stehen die Substituenten R'" und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F (Die Bezeichnung ,A/F' verweist hierbei auf eine Mischung von Aceton mit Formaldehyd, welche als Edukt bei dessen Herstellung verwendet wird). Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Bevorzugt stellt das Epoxidharz **A** ein Epoxid-Flüssigharz der Formel (XI) dar. In einer noch mehr bevorzugten Ausführungsform enthält der hitzehärtende Epoxidharzklebstoff sowohl mindestens ein Epoxid-Flüssigharz der Formel (XI) als auch mindestens ein Epoxid-Festharz der Formel (X).

Der Anteil von Epoxidharzes **A** beträgt vorzugsweise 10 - 85 Gew.-%, insbesondere 15 - 70 Gew.-%, bevorzugt 15 - 60 Gew.-%, am Gewicht des Klebstoffs.

Der hitzehärtende einkomponentige Epoxidharzklebstoff enthält weiterhin mindestens einen Härter **B** für Epoxidharze, welcher durch erhöhte Temperatur aktiviert wird. Es handelt sich hierbei vorzugsweise um einen Härter, welcher ausgewählt ist aus der Gruppe bestehend aus Dicyandiamid, Guanamine, Guanidine, Aminoguanidine und deren Derivate. Weiterhin möglich sind beschleunigend wirksame Härter, wie substituierte Harnstoffe, wie beispielsweise 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron) oder 3,4-Dichlorphenyl-N,N-dimethylharnstoff (Diuron). Weiterhin können Verbindungen der Klasse der Imidazole und Amin-Komplexe eingesetzt werden.

Bevorzugt handelt es sich beim Härter **B** um einen Härter, welcher ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), sowie Imidazole und Amin-Komplexe.

Besonders bevorzugt als Härter **B** ist Dicyandiamid.

Vorteilhaft beträgt der Gesamtanteil des Härters **B** 0.5 - 12 Gewichts-%, vorzugsweise 1 - 8 Gewichts-%, bezogen auf das Gewicht des gesamten Klebstoffs.

Der hitzehärtende Epoxidharzklebstoff kann weiterhin ein Thixotropiermittel **C** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenylmethylen-diisocyanat (MDI) mit Butylamin erwiesen.

Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.

Die Herstellung von solchen bevorzugten Harnstoffderivaten und Trägermaterialien sind im Detail in der Patentanmeldung EP 1 152 019 A1 beschrieben. Das Trägermaterial ist vorteilhaft ein blockiertes Polyurethanprepolymer **PU2**, insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels **C** 0 - 40 Gewichts-%, vorzugsweise 5 - 25 % Gewichts-%, bezogen auf das Gewicht des gesamten Klebstoffs. Das Verhältnis vom Gewicht des Harnstoffderivates zum Gewicht des allenfalls vorhandenen Trägermittels beträgt vorzugsweise 2 / 98 bis 50 / 50, insbesondere 5 / 95 - 25 /75.

Der hitzehärtende Epoxidharzklebstoff enthält vorzugsweise weiterhin einen Flüssigkautschuk **D**, welcher vorzugsweise ein carboxyl- oder epoxidterminiertes Polymer ist.

In einer ersten Ausführungsform ist dieser Flüssigkautschuk **D** ein carboxyl- oder epoxidterminiertes Acrylnitril/Butadien-Copolymer oder ein Derivat davon. Derartige Flüssigkautschuke sind beispielsweise unter dem unter dem Namen Hycar® CTBN und CTBNX und ETBN von Nanoresins AG, Deutschland kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer zweiten Ausführungsform ist dieser Flüssigkautschuk **D** ein Polyacrylatflüssigkautschuk, der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von carboxyl- oder epoxidterminierten Acrylnitril/Butadien-Copolymeren oder von Derivaten davon.

Der Flüssigkautschuk **D** wird vorteilhaft in einer Menge von 1 - 35 Gew.-%, insbesondere 1 - 25 Gew.-%, bezogen auf das Gewicht des Klebstoffs, eingesetzt.

Der hitzehärtende Epoxidharzklebstoff enthält vorzugsweise weiterhin einen festen Zähigkeitsverbesserer **E**. Unter einem "Zähigkeitsverbesserer" wird hierbei und im Folgenden ein Zusatz zu einer Epoxidharzmatrix verstanden, der bereits bei geringen Zuschlägen von 0.1 - 15 Gew.-%, insbesondere von 0.5 - 8 Gew.-%, eine deutliche Zunahme der Zähigkeit bewirkt und somit in der Lage ist, höherer Biege-, Zug-, Schlag- oder Stossbeanspruchung aufzunehmen, bevor die Matrix einreisst oder bricht.

Der feste Zähigkeitsverbesserer **E** ist in einer ersten Ausführungsform ein organisches Ionen-getauschtes Schichtmineral **E1.**

Das Ionen-getauschte Schichtmineral **E1** kann entweder ein Kationen-getauschtes Schichtmineral **E1c** oder ein Anionen-getauschtes Schichtmineral **E1a** sein.

Das Kationen-getauschte Schichtmineral **E1c** wird hierbei erhalten aus einem Schichtmineral **E1'**, bei welchem zumindest ein Teil der Kationen durch organische Kationen ausgetauscht worden sind. Beispiele für derartige Kationen-getauschte Schichtmineralien **E1c** sind insbesondere diejenigen, welche in US 5,707,439 oder in US 6,197,849 erwähnt sind. Ebenso ist dort das Verfahren zur Herstellung dieser Kationen-getauschten Schichtminerale **E1c** beschrieben. Bevorzugt als Schichtmineral **E1'** ist ein Schichtsilikat. Insbesondere bevorzugt handelt es sich beim Schichtmineral **E1'** um ein Phyllosilikat, wie sie in US 6,197,849 Spalte 2, Zeile 38 bis Spalte 3, Zeile 5 beschrieben sind, insbesondere um einen Bentonit. Als besonders geeignet halben sich Schichtmineral **E1'** wie Kaolinit oder ein Montmorillionit oder ein Hectorit oder ein Illit gezeigt.

Zumindest ein Teil der Kationen des Schichtminerals **E1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.

Bevorzugte Kationen-getauschte Schichtminerale **E1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) erhältlich.

Das Anionen-getauschte Schichtmineral **E1a** wird hierbei erhalten aus einem Schichtmineral **E1"**, bei welchem zumindest ein Teil der Anionen durch organische Anionen ausgetauscht worden sind. Ein Beispiel für ein derartig Anionen-getauschtes Schichtmineral **E1a** ist ein Hydrotalcit **E1"**, bei dem zumindest ein Teil der Carbonat-Anionen der Zwischenschichten durch organische Anionen ausgetauscht wurden. Ein weiteres Beispiel sind funktionalisierte Alumoxane wie z. B. in US Patent 6 322890 beschrieben.

Es ist durchaus auch möglich, dass die Zusammensetzung gleichzeitig ein Kationen-getauschtes Schichtmineral **E1c** und ein Anionen-getauschtes Schichtmineral **E1a** enthält.

Der feste Zähigkeitsverbesserer ist in einer zweiten Ausführungsform ein Blockcopolymer **E2**. Das Blockcopolymer **E2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere **E2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

Der feste Zähigkeitsverbesserer E ist in einer dritten Ausführungsform ein Core-Shell Polymer **E3**. Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvemetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur^{™} von Nanoresins AG, Deutschland, angeboten.

Der feste Zähigkeitsverbesserer **E** ist in einer vierten Ausführungsform ein festes Umsetzungsprodukt **E4** eines carboxylierten festen Nitrilkautschuks mit überschüssigem Epoxidharz.

Als fester Zähigkeitsverbesserer **E** sind Core-Shell Polymere bevorzugt.

Der hitzehärtende Epoxidharzklebstoff kann das feste Core-Shell Polymer E3 enthalten, insbesondere in einer Menge von 0.1 - 15 Gew.-%, vorzugsweise 1 - 8 Gew.-%, bezogen auf das Gewicht des Klebstoffs.

In einer weiteren bevorzugten Ausführungsform enthält der hitzehärtende Epoxidharzklebstoff zusätzlich mindestens einen Füllstoff **F**. Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, oder Farbpigmente. Als Füllstoff **F** sind sowohl die organisch beschichteten als auch die unbeschichteten kommerziell erhältlichen und dem Fachmann bekannten Formen gemeint.

Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht des gesamten Klebstoffs.

In einer weiteren bevorzugten Ausführungsform enthält der hitzehärtende Epoxidharzklebstoff ein physikalisches oder chemisches Treibmittel, wie es beispielsweise unter dem Handelsnamen Expancel™ der Firma Akzo Nobel oder Celogen™ der Firma Chemtura erhältlich ist. Der Anteil des Treibmittels beträgt vorteilhaft 0.1 - 3 Gew.-%, bezogen auf das Gewicht des Klebstoffs.

In einer weiteren bevorzugten Ausführungsform enthält der hitzehärtende Epoxidharzklebstoff zusätzlich mindestens einen Epoxidgruppen-tragenden Reaktivverdünner **G**. Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, z.B. Butanolglycidylether, Hexanolglycidylether, 2-Ethylhexanolglycidylether, Allylglycidylether, Tetrahydrofurfuryl- und Furfurylglycidylether, Trimethoxysilylglycidylether etc.
- Glycidylether von difunktionellen gesättigten oder ungesättigten, verzweigten oder unverzweigten, zyklischen oder offenkettigen C₂ - C₃₀ Alkolen, z.B Ethylenglykol-, Butandiol-, Hexandiol-, Oktandiolgylcidylether, Cyclohexandimethanoldigylcidylether, Neopentylglycoldiglycidylether etc.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin, Trimethylolpropan etc.
- Glycidylether von Phenol- und Anilinverbindungen wie Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin etc.
- Epoxidierte Amine wie N, N-Diglycidylcyclohexylamin etc.
- Epoxidiert Mono- oder Dicarbonsäuren wie Neodecansäure-glycidylester, Methacrylsäureglycidylester, Benzoesäureglycidylester, Phthalsäure-, Tetra- und Hexahydrophthalsäurediglycidylester, Diglycidylester von dimeren Fettsäuren etc.
- Epoxidierte di- oder trifunktionelle, nieder- bis hochmolekulare Polyetherpolyole wie Polyethylenglycol-diglycidylether, Polypropyleneglycol-diglycidylether etc.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners G 0.5 - 20 Gewichts-%, vorzugsweise 1 - 8 Gewichts-%, bezogen auf das Gewicht des gesamten Klebstoffs.

Der hitzehärtende Epoxidharzklebstoff kann weitere Bestandteile, insbesondere Katalysatoren, Hitze- und/oder Lichtstabilisatoren, Thixotropiermittel, Weichmacher, Lösungsmittel, mineralische oder organische Füllstoffe, Treibmittel, Farbstoffe, Haftvermittler und Pigmente, umfassen.

Der Klebstoff weist in einer besonders bevorzugten Ausführungsform Abstandhalter auf. Als ein Abstandhalter wird im vorliegenden Dokument ein Körper verstanden, welcher zwei Körper auf räumliche Distanz zueinender hält, wenn der Abstandhalter sich zwischen diesen zwei Körpern befindet.

Der Abstandhalter kann unterschiedlich ausgestaltet sein. Es können sehr unterschiedliche Materialien und Formen von Abstandhalter verwendet werden. Der Abstandhalter kann beispielsweise plattig, bänderartig, stäbchenförmig, quaderförmig, würfelförmig, kegelförmig, kegelstumpfförmig, pyramidal, pyramidenstumpfförmig, kugelig, ellipsoidförmig oder kugelförmig sein. Besonders bevorzugt sind derartige Abstandhalter, welche möglichst gleichförmige Ausdehnungsdicken aufweisen. Weiterhin sind bevorzugt derartige Abstandhalter, welche keine Spitzen, die senkrecht zum Innenblech, und/oder Aussenblech stehen, aufweisen, weil durch die kleine Auflagefläche des Aussenblechs und/oder des Innenblechs bei dem grossen Verpressdruck das Blech sich verformen könnte, so dass sich die Lage der Abstandhalter auf dem Aussenblech abzeichnen kann, was optisch vielfach nicht akzeptabel ist. Insbesondere bevorzugt sind Kugeln und Würfel als Abstandhalter.

Die Abstandhalter weisen insbesondere eine kugelige Form, bevorzugt eine Kugelform auf. Meist bevorzugt sind kugelförmige Abstandhalter.

Die Abstandhalter können hohl oder gefüllt sein. Hohle Abstandhalter sind vielfach aus Gewichtsgründen bevorzugt. Die Wanddicke derartiger hohler Abstandhalter ist abhängig von den mechanischen Eigenschaften des Wandmaterials, insbesondere dessen Druckfestigkeit. Beispiele für derartige hohle Abstandhalter sind Glashohlkugeln, Keramikhohlkugeln oder Stahlhohlkugeln.

Die Abstandhalter können aus unterschiedlichen Materialien gefertigt sein. Insbesondere ist es für das vorliegende Verfahren von grossem Vorteil, wenn der Abstandhalter druckstabil und möglichst hart ist. Somit weist der Abstandhalter vorteilhaft eine Härte nach der Mohs-Härteskala von grösser als 5, bevorzugt grösser als 6, insbesondere grösser als 7, auf. Es ist nämlich von Vorteil, wenn der Abstandhalter dem Druck bei der Verpressung widersteht. Der Abstandhalter ist deshalb insbesondere aus Glas, Keramik, Metall, Metalllegierung, Aluminumoxid, Siliziumdioxid, Zirkoniumoxid, Nitrid, insbesondere Bornitrid, oder Carbid, insbesondere Siliziumcarbid. Als Metalle sind insbesondere Eisenmetalle, Buntmetalle oder Weissmetalle zu betrachten.

Der Abstandhalter verfügt vorteilhaft über eine möglichst enge Grössenverteilung, insbesondere über eine monomodale Grössenverteilung, d.h. dass alle Abstandhalter in etwa dieselbe Grösse aufweisen.

Meist bevorzugt ist der Abstandhalter aus Glas, Stahl oder Keramik.

Der Anteil des Abstandhalters ist vorzugsweise derart gewählt, dass der Volumenanteil des Abstandhalters nicht mehr als 10 Volumen-%, insbesondere zwischen 0.1 und 4 Volumen-%, bevorzugt zwischen 0.5 und 3 Volumen-%, beträgt.

Die Abstandhalter weisen vorteilhaft eine Partikelgrösse von weniger als 1 mm auf.

Die Abstandhalter können in den Klebstoff bei seiner Herstellung eingebracht werden oder sie können während oder unmittelbar nach dem Applizieren des Klebstoffs in Schritt a) in den Klebstoff eingemischt, eingeblasen, eingestreut oder aufgestreut werden. Derartige allenfalls vorhandene Abstandhalter werden in diesem Dokument als Bestandteil des Klebstoffs betrachtet.

Der Klebstoff ist hochviskos, das heisst, er weist eine Viskosität von mehr als 900 Pas, insbesondere mehr 1000 Pas, bei 25°C auf. Bevorzugt weist die Viskosität bei 25 °C einen Wert zwischen 1000 Pas und 4000 Pas auf. Meist bevorzugt beträgt die Viskosität bei 25 °C einen Wert zwischen 1000 Pas und 3000 Pas, insbesondere zwischen 1100 und 2800 Pas. Die Viskosität wird hierbei oszillographisch mittels eines Rheometers mit beheizbarer Platte (CVO 120 HR, Firma Bohlin) gemessen (Spalt 1000 µm, Mess-Plattendurchmesser: 25 mm (Platte/Platte), Deformation 0.01 bei 5 Hz, Temperatur: 25°C). Bei 60°C weist der Klebstoff vorteilhaft eine Viskosität (entsprechend bei 60°C gemessen) zwischen 600 und 50 Pas auf. Bei 50°C weist der Klebstoff vorteilhaft eine Viskosität (entsprechend bei 50°C gemessen) zwischen 800 und 150 Pas auf.

Der Klebstoff wird in einem ersten Schritt (a) des erfindungsgemässen Verfahrens auf ein Innenblech oder ein Aussenblech aufgetragen. Dies erfolgt vorteilhaft bei einer Applikationstemperatur des Klebstoffs von 23°C bis 80°C, insbesondere von 23°C und 60°C, bevorzugt von 50 bis 60°C.

Der Klebstoffauftrag erfolgt typischerweise im Randbereich des Aussenbleches. Die Menge und genaue Applikationsstelle des Klebstoffes ist derart, dass nach dem weiter unten beschriebenen Verpressen der Bördelfalz möglichst vollständig mit Klebstoff gefüllt ist. Der Auftrag erfolgt vorzugsweise automatisch und vorzugsweise in Form einer Klebstoffraupe.

In einem zweiten Schritt (b) des erfindungsgemässen Verfahrens wird dann der Klebstoff mit dem Innenblech oder dem Aussenblech kontaktiert. Damit stehen nun Innenblech und Aussenblech mit dem Klebstoff in Kontakt.

Selbstverständlich ist es auch möglich, dass mehrere Innenbleche, welche miteinander unter Wiederholung der Schritte a) und b) miteinander verklebt werden, für die Herstellung eines Bördelfalzes verwendet werden können.

In einem dritten Schritt (c) des erfindungsgemässen Verfahrens wird das Aussenblech um das Innenblech gebördelt, so dass im Innenraum des so gebildeten Falzes Klebstoff vorhanden ist.

In einem vierten Schritt (d) des erfindungsgemässen Verfahrens wird nun der Bördelfalz verpresst. Vorzugsweise erfolgt das Verpressen des Bördelfalzes auf eine Klebstoffschichtdicke (dₓ), welcher der Dicke (d_{y}) des gegebenenfalls vorhandenen Abstandhalters entspricht.

Als Dicke des Abstandhalters, auch als "d_{y}" bezeichnet, gilt hierbei in diesem Dokument die Dicke des Abstandshalters senkrecht zur Aussenblechfläche. Geometrisch noch genauer wird die Dicke des Abstandhalters als räumliche Ausdehnung des Abstandhalters in zum Normalvektor der Tangentialfläche der Innenblechoberfläche am zum Abstandhalter nächstliegenden Punkt parallel stehender Richtung definiert.

Durch das Verpressen wird die Klebstoffschichtdicke, welche in diesem Dokument auch als "dₓ" bezeichnet wird, verkleinert und zwar so, dass sie der Dicke des Abstandhalters entspricht. Der Ausdruck "entspricht" ist in diesem Zusammenhang nicht als "absolut identisch" auszulegen. Er umfasst auch geringe Abweichungen von diesem Wert, die typischerweise maximal 20% betragen. Bei einer absoluten Identität, wäre nämlich zwischen dem Abstandhalter und Innenblech, bzw. Aussenblech, kein Klebstoffbindemittel, d.h. reaktive Klebstoffbestandteile, mehr vorhanden. Dies ist zwar grundsätzlich möglich, aber es ist vorteilhaft, wenn sich zwischen Abstandhalter und Innenblech und/oder Aussenblech eine dünne Schicht von Klebstoffbindemittel befindet. Auf der anderen Seite können bei sehr harten Abstandhaltern diese unter Umständen teilweise in das Blech eingedrückt werden. Dies ist solange akzeptierbar, solange dies zu keinen störenden Abzeichnungen auf dem Aussenblech führt.

Die Dicke des Abstandhalters wird insbesondere vor allem von der Dicke des zu erzielenden Bördelfalzes und damit insbesondere von der Dicke des Aussenbleches, in diesem Dokument auch als "d_{z}" bezeichnet, beeinflusst. Vorzugsweise beträgt das Verhältnis der Dicke (d_{y}) des Abstandhalters zur Dicke (d_{z}) des Aussenbleches einen Wert von 0.05 - 0.80. Bei einer typischen Dicke eines Aussenbleches für eine Bördelfalzverklebung von 0.5 bis 1.5 mm werden deshalb Abstandhalter der Dicke von insbesondere 0.08 bis 0.4 mm eingesetzt. Bevorzugt sind Abstandhalter der Dicke 0.1 bis 0.2 mm und Aussenbleche der Dicke 0.5 bis 1.2 mm. Die Dicke der Innenbleche wird vorzugsweise im ähnlichen Dickenbereich wie das Aussenblech ausgewählt.

Als Innenblech und Aussenblech sind grundsätzlich alle die vom Fachmann bekannten Bleche geeignet. Insbesondere sind dies diejenigen Blechmaterialien, welche für die Bördelfalzverklebung bereits im Transportmittelbau oder in der Herstellung von Weisswaren benutzt werden.

Bevorzugte Bleche sind aus Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Das Bördeln und Verpressen erfolgt mit dem Fachmann bekannten Werkzeugen.

Nach dem Verpressen erfolgt bei der Druckentlastung eine gewisse Rückfederung, welche dazu führt, dass das durch Innenblech und Aussenblech begrenzte Volumen des Bördelfalzes sich vergrössert. Bei dem erfindungsgemässen Verfahren wird aufgrund des verwendeten Klebstoffes diese Volumenvergrösserung durch den hochviskosen Klebstoff weitgehend kompensiert und es treten bedeutend weniger Luftblasen oder Kanäle (auch als Meander bezeichnet) auf.

In einem weiteren Schritt (e) des erfindungsgemässen Verfahrens wird thermischer Energie in den Klebstoff eingeführt. Das Zuführen der thermischen Energie bewirkt das Vernetzen des Klebstoffes in hitzehärtenden Klebstoffen, bzw. beschleunigt das Vernetzen des Klebstoffes, so dass möglichst schnell eine genügend hohe Festigkeit der Bördelfalzverklebung erzielt wird.

Somit schliesst vorzugsweise anschliessend an Schritt e) ein Schritt f) des Vernetzens des Klebstoffes an.

In einer besonders bevorzugten Ausführungsform erfolgt anschliessend an den Schritt des Verpressens (d) oder an den Schritt des Einführens von thermischer Energie (e) ein Schritt (g) des Abdichtens der Bördelfalznaht mittels eines Dichtstoffes. Der Dichtstoff hat einerseits die Funktion die Bördelfalznaht optisch sauber zu gestalten, da sie vielfach optisch sichtbar ist und andererseits den durch das Rückfedern des Bördelfalzes nach Druckentlastung in den Falz zurück gezogene Klebstoff zu kompensieren und die Naht abzudichten. Es ist bevorzugt, dass im Bördelfalz möglichst keine Luftblasen vorhanden sind und der Zwischenraum zwischen Aussen- und Innenblech möglichst vollständig mit Klebstoff und/oder Dichtstoff gefüllt ist.

Als Dichtstoff können für die Bördelfalznahtabdichtung oder -versiegelung bereits bekannte Dichtstoffe eingesetzt werden. Der Dichtstoff kann in einer Ausführungsform durch UV-Licht vorverhärtet, bzw. ausgehärtet, werden. In einer weiteren Ausführungsform wird der Dichtstoff ebenfalls über das Zuführen von thermischer Energie vernetzt, bzw. beschleunigt. Es erfolgt somit nach dem Schritt g) vorteilhaft ein weiterer Schritt (h) des Einführens thermischer Energie in den Dichtstoff (10).

Als Dichtstoffe eignen sich einkomponentige Dichtstoffe, welche hitze-oder UV-härtend sind oder bei Raumtemperatur härtende oder vorverhärtende zweikomponentige Epoxidharz- oder Polyurethan- oder (Meth)acrylatdichtstoffe oder vulkanisierbare Kautschukdichtstoffe. Es ist wichtig bei diesen Dichtstoffen, dass sie ihre Dichtfunktion gut erfüllen und vorteilhaft elastisch sind.

Es ist von grossem Vorteil, wenn sowohl Klebstoff als auch Dichtstoff möglichst auswaschbeständig sind, da üblicherweise die derart herstellten Bördelfalz-Verklebungen in ein KTL-Bad (KTL = Kathodische Tauch-Lackierung) gelangen, welches sie möglichst nicht verschmutzen sollten.

Insbesondere bevorzugt kann der zur Bördelfalz-Verklebung eingesetzte Klebstoff auch als Dichtstoff eingesetzt werden. Dies hat den grossen Vorteil, dass lediglich ein Kleb- und Dichtstoff zum Verkleben und Abdichten des Bördelfalzes verwendet wird, was wiederum logistische und applikationstechnische Vorteile mit sich bringt.

Es hat sich als besonders bevorzugt herausgestellt, wenn der Dichtstoff zusammen mit dem Klebstoff durch thermische Energie vernetzt wird.

In gewissen Fällen kann es von Vorteil sein, der Klebstoff vor dem Auftragen des Dichtstoffes zuerst über das Einführen von thermischer Energie zumindest vorvernetzt wird und zusammen mit dem Dichtstoff dann vollständig vernetzt wird.

Wenn im beschriebenen Verfahren lediglich einmal thermische Energie zugeführt werden muss, dass heisst, wenn der Klebstoff und der Dichtstoff gleichzeitig vernetzt werden, ist dies besonders vorteilhaft, da ein Schritt eingespart werden kann.

Die thermische Energie wird insbesondere über Infrarotstrahlung oder Induktionsheizung in den Klebstoff eingebracht.

Es ist vorteilhaft, wenn durch die Einführung von thermische Energie der Klebstoff auf eine Temperatur von 100 - 220 °C, vorzugsweise 120 - 200°C aufgeheizt wird.

Die endgültige Vernetzung kann auch im KTL-Ofen erfolgen.

Ein weiterer Aspekt der Erfindung betrifft eine Bördelfalzverklebung, welche nach dem vorgängig beschriebenen Verfahren hergestellt wird.

Weiterhin betrifft die Erfindung die Verwendung des vorgängig beschriebenen Verfahrens zur Herstellung von Bördelfalzverklebungen in der Herstellung von Transportmitteln, insbesondere von Automobilen, Bussen, Lastkraftwagen, Schienenfahrzeugen, Schiffen oder Luftfahrzeugen, oder Weisswaren, insbesondere Waschmaschinen, Tumbler oder Geschirrspülern.

Ein weiterer Aspekt der Erfindung betrifft ein Bördelfalz-Klebverbundkörper, welcher ein gebördeltes Aussenblech, ein Innenblech und einen vernetzten Klebstoff, wie vorgängig beschrieben, der zwischen der nicht gebogenen Innenflanke des Aussenbleches und dem Innenblech angeordnet ist. In einer bevorzugten Ausführungsform weist der Klebstoff Abstandhalter der Abstandhalterdicke (d_{y}), welche zwischen der nicht gebogenen Innenflanke des Aussenbleches und dem Innenblech eingelagert sind, auf. Die Kante des Innenbleches im Bördelfalz ist hierbei vorzugsweise vollständig von Klebstoff umgeben. In einer besonders bevorzugten Ausführungsform ist die Bördelfalznaht, welche von der Kante des Aussenblechs und dem Innenblech gebildet wird, mittels eines Dichtstoffes abgedichtet.

Schliesslich wird in einem weiteren Aspekt der Erfindung ein Artikel, welcher eine beschriebene Bördelfalzverklebung aufweist, beansprucht

Derartige Artikel oder Bördelfalz-Klebverbundkörper sind insbesondere Transportmittel, insbesondere ein Automobil, Bus, Lastkraftwagen, Schienenfahrzeug, ein Schiff oder ein Luftfahrzeug ist, oder eine Weissware, insbesondere eine Waschmaschine, Tumbler oder Geschirrspüler.

### Kurze Beschreibung der Zeichnung

Im Folgenden werden anhand der Zeichnungen ausgewählte Ausführungsbeispiele der Erfindung näher erläutert. Gleiche Elemente sind in den verschiedenen Figuren mit den gleichen Bezugszeichen versehen. Die Richtung von Kräften beziehungsweise Bewegungen ist mit Pfeilen angegeben.

Es zeigen:
- Fig. 1 a-d: eine schematische Querschnitt-Darstellung der Herstellung einer bevorzugten Bördelfalzverklebung umfassend unterschiedliche Stufen
- Fig. 1a: Applikation eines Klebstoffes auf das Aussenblech
- Fig. 1b: Kontaktieren des Klebstoffs mit dem Innenblech
- Fig. 1c: Bördeln des Aussenblechs und Verpressen des Bördelfalzes
- Fig. 1d: Einführen thermischer Energie und Vernetzen des Klebstoffes
- Fig. 2a, 2b: eine schematische Querschnitt-Darstellung von zu Fig. 1a und Fig.1b alternativen Verfahrensschritte in der Herstellung einer Bördelfalzverklebung

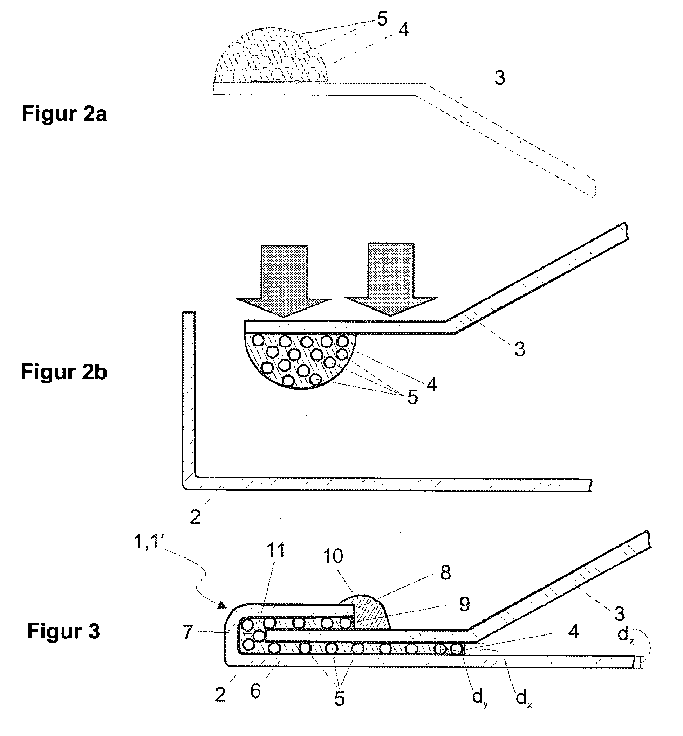

- Fig. 2a: Applikation eines Klebstoffes auf das Innenblech
- Fig. 2b: Kontaktieren des Klebstoffs mit dem Aussenblech
- Fig. 3: eine schematische Querschnitt-Darstellung einer Bördelfalz-Klebverbundkörpers mit auf der Bördelfalznaht aufgebrachten Dichtstoff

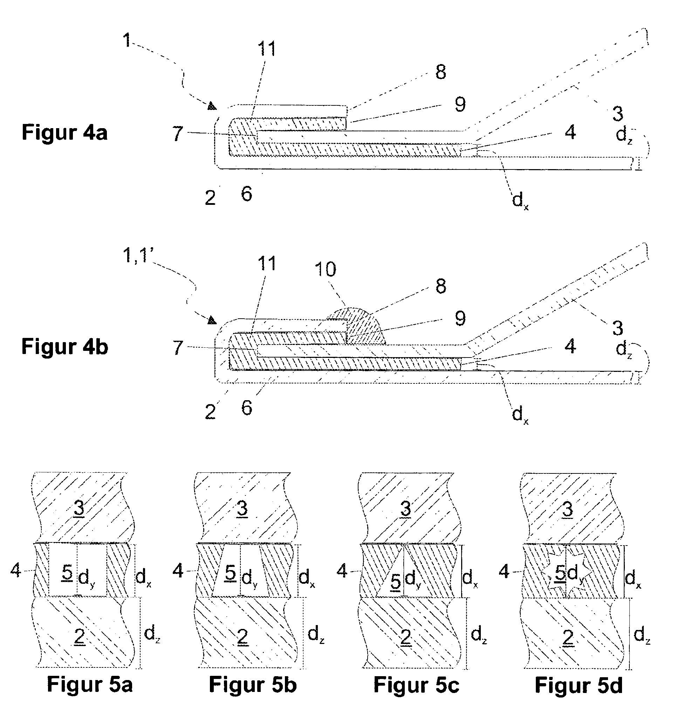

- Fig. 4: eine schematische Querschnitt-Darstellung einer Bördelfalz-Klebverbundkörpers ohne Abstandhalter 5 ohne (Fig. 4a) und mit (Fig. 4b) auf der Bördelfalznaht aufgebrachten Dichtstoff
- Fig. 5: eine schematische Querschnitt-Darstellung von unterschiedlichen Abstandhaltergeometrien

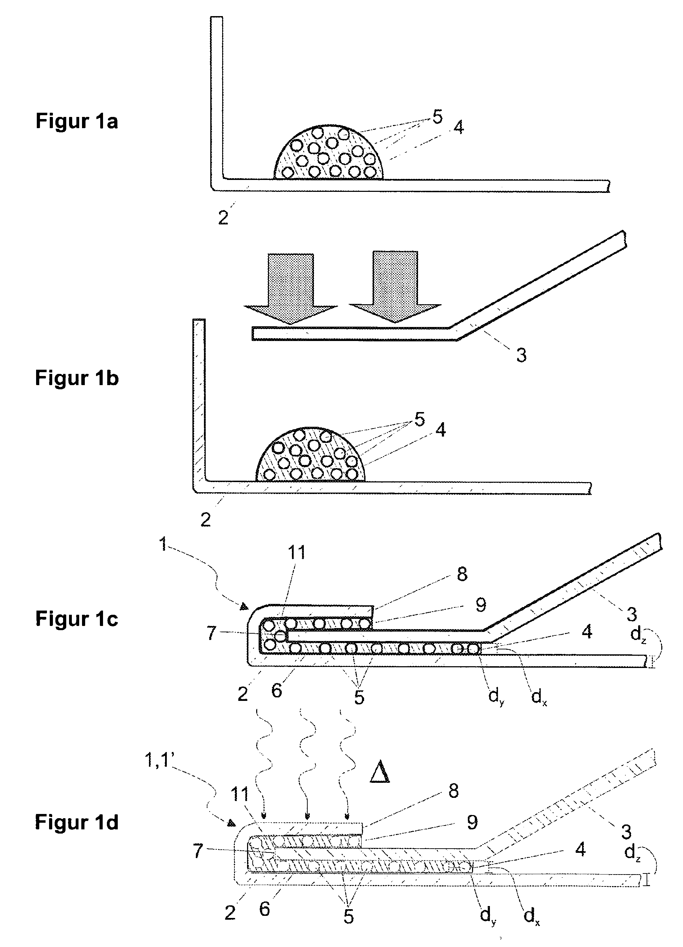

Figuren 1a bis 1d zeigen schematisch dargestellt unterschiedliche Zwischenstufen im Verfahren zur Herstellung einer Bördelfalzverklebung.

In einem ersten Schritt a) dieses Verfahrens wird der Klebstoff 4, welcher bei 25°C eine Viskosität von > 900 Pas, insbesondere > 1000 Pas, aufweist auf den Randbereich eines Aussenbleches 2, aufgetragen. Figur 1a zeigt die Zwischenstufe einer bevorzugten Ausführungsform mit Abstandhalter 5 nach diesem ersten Schritt. Der Auftrag des Klebstoffs 4 erfolgt in dieser Darstellung in Form einer Rundraupe in dem Bereich des Randbereichs des Aussenblechs 2, wo der Kontakt mit dem Innenblech erfolgen soll. Das Aussenblech 2 weist in dieser Darstellung bereits eine Umformung des Randbereiches auf. Eine derartige Umformung kann vor dem Auftrag des Klebstoffs bereits bestehen oder im Rahmen der Bördelung erfolgen. Die Abstandhalter 5 sind in dieser Darstellung Kugeln.

In einem zweiten Schritt b) dieses Verfahrens wird der Klebstoff 4 mit dem Innenblech 3 kontaktiert. Figur 1b zeigt diesen Prozess schematisch. In dieser Darstellung wird das Innenblech 3 von oben auf das mit Klebstoff 4 belegte Aussenblech 2 hin bewegt und es erfolgt unter leichtem Andrücken ein Kontakt zwischen Innenblech 3 und Klebstoff 4.

In einem drittem Schritt c) dieses Verfahrens erfolgt das Bördeln des Aussenbleches 2 um das Innenblech 3, so dass im Innenraum 11 des Bördelfalzes 1 Klebstoff 4 vorhanden ist. In einem vierten Schritt d) erfolgt das Verpressen des Bördelfalzes 1. In der hier dargestellten Ausführungsform wird der Bördelfalz auf eine Klebstoffschichtdicke dₓ, welcher der Dicke d_{y} des Abstandhalters 5 entspricht, verpresst. Figur 1c zeigt die Zwischenstufe nach diesen zwei Verfahrensschritten auf. Die Kante 7 des Innenbleches 3 ist vom Klebstoff 4 vollständig umgeben, während die Kante 8 des Aussenbleches 2, welche zusammen mit dem Innenblech 3 die Bördelfalznaht 9 bildet, frei nicht vollständig vom Klebstoff umhüllt ist. Der Klebstoff 4 und die darin enthaltenen Abstandhalter 5 sind nicht nur im gebogenen Teil des Bördelfalzes vorhanden sondern auch im Bereich zwischen Innenblech 3 und dem nicht gebogenen Aussenblech 2. Somit befinden sich Abstandhalter 5 zwischen dem Innenblech 3 und der nicht gebogenen Innenflanke 6 des Aussenblechs 2.

Figur 1d zeigt den weiteren Schritt e) des Einführens von thermischer Energie (Δ) in den Klebstoff 4. Hierdurch erfolgt in Schritt f) des Vernetzens des Klebstoffs. In dieser Darstellung wird die thermische Energie durch eine Wärmestrahlung, welche auf den Bördelfalz 1 im Bereich der Bördelung erfolgt. Dies kann beispielsweise durch einen IR-Strahler oder Heissluftföhn erfolgen. Das erwärmte Aussenblech 2 transferiert die Wärme auf den Klebstoff 4, welcher dann unter Hitzeeinwirkung vernetzt. Optimalerweise wäre eine allseitige Wärmeeinwirkung um den Bördelfalz um eine schnelle gleichmässige Durchhärtung des Klebstoffs 4 zu erreichen. Als Alternative hierfür kann auch eine Erwärmung durch Induktion erfolgen. Der Klebstoff 4 füllt den Innenraum 11 des Bordelfalzes 1 vollständig ohne Bildung von Luftblasen aus. Der so hergestellte Bördelfalz-Klebverbundkörper 1' kann beispielsweise als Tür oder zur Herstellung einer Tür verwendet werden.

Figur 2a und Figur 2b zeigen eine Alternative zu den in Figur 1 a und 1 b dargestellten Schritten. Im ersten Schritt a) dieses Verfahrens wird hier der Klebstoff 4, welcher bei 25°C eine Viskosität von > 900 Pas aufweist auf das Innenblech 3, aufgetragen. Der Auftrag des Klebstoffs 4 erfolgt in dieser Darstellung in Form einer Rundraupe auf den Randbereich des zu umbördelnden Innenbleches 3. Figur 2a zeigt diese Situation schematisch nach der Applikation des Klebstoffs.

In zweiten Schritt b) dieses Verfahrens wird hier der Klebstoff 4 mit dem Aussenblech 2 kontaktiert. Figur 2b zeigt diesen Prozess schematisch. In dieser Darstellung wird das Innenblech 3 nach der Applikation des Klebstoffs 4 umgedreht und so der Klebstoff 4 auf das Aussenblech 2 hin bewegt und unter leichtem Andrücken erfolgt ein Kontakt zwischen Aussenblech 2 und Klebstoff 4.

Figur 3 stellt schematisch eine bevorzugte Ausführungsform dar, bei welcher ein Dichtstoff 10 die Bördelfalznaht 9 des Bördelfalzes 1 abdichtet. Wie bereits bei Figuren 1a bis 1d beschrieben, bildet sich bei der Herstellung eines Bördelfalzes 1 aus der Kante 7 des Aussenblechs 2 und dem Innenblech 3 eine Bördelfalznaht 9. Diese Bördelfalznaht 9 wird durch einen Dichtstoff 10 abgedichtet. Der Auftrag des Dichtstoffes kann manuell oder automatisch erfolgen. Bevorzugt wird er automatisch appliziert. Der Dichtstoff kann anschliessend an den Schritt d) des Verpressens oder an Schritt e) des Einbringens Einführens von thermischer Energie in den Klebstoff erfolgen. Besonders bevorzugt werden Klebstoff 4 und Dichtstoff 10 gleichzeitig unter Zuführen von thermischer Energie ausgehärtet.

Der Dichtstoff 10 greift in der hier dargestellten Form auf die Aussenseite des Aussenbleches 2 sowie auf der Aussenseite des Innenbleches 3 über, so dass die die gesamte Kante 8 des Aussenbleches 2 durch Dichtstoff 10, bzw. Klebstoff 4, umhüllt ist, um eine vollständige Abdichtung möglichst optimal zu gewährleisten. Es kann aber auch sein, dass der Dichtstoff lediglich die Bördelfalznaht 9 abdichtet. Dies kann aus optischen Gesichtspunkten vorteilhaft sein, aus korrosionstechnischen Gesichtspunkten ist dies aber weniger vorteilhaft, da das Aussenblech 2 an der Kante 8 des Aussenblechs eine Gefahr von Korrosion bestehen kann. Der Klebstoff 4 verfüllt den Innenraum 11 des Bördelfalzes 1 vollständig ohne Bildung von Luftblasen, während der Dichtstoff 10 die Bördelfalznaht 9 vollständig ohne Bildung von Luftblasen oder Kanälen abdichtet. Nach der Aushärtung des Dichtstoffs 10 kann der so hergestellte Bördelfalz-Klebverbundkörper 1' beispielsweise als Tür oder zur Herstellung einer Tür verwendet werden.

Figur 4, d.h. Fig. 4a und Fig. 4b, stellt schematisch eine Ausführungsform eines Bördelfalz-Klebverbundkörpers 1' ohne Abstandhalter 5 dar. Der Bördelfalz-Klebverbundkörper gemäss Figur 4a weist keinen Dichtstoff 10 auf, während derjenige von Figur 4b einen Dichtstoff 10 aufweist und demjenigen von Figur 3 entspricht, ausser dass hier der Klebstoff keine Abstandhalter 5 enthält. Die Herstellung dieser Bördelfalz-Klebverbundkörper 1' entspricht denjenigen, wie sie in den Figuren 1a - 1d, 2a, 2b und 3 bereits für die entsprechenden Abstandhalter 5 enthaltenden Bördelfalz-Klebverbundkörper 1' beschreiben wurden.

Figuren 5a bis 5b zeigen weitere Bespiele von unterschiedlichen Abstandhaltergeometrien in einem Querschnitt durch einen Bördelfalz-Klebverbundkörper 1'. Der Einfachheit halber wurde lediglich Aussenblech 2, Innenblech 3, Klebstoff 4 und Abstandhalter 5 dargestellt. Der Klebstoff 4 ist auf eine Klebstoffschichtdicke dₓ verpresst worden. Der Abstandhalter 5 weist eine Dicke d_{y} des Abstandhalters auf. Das Aussenblech weist die Dicke d_{z} auf. Das Verhältnis d_{y}/d_{z} der Dicken des Abstandhalters 5 zu Dicken des Aussenbleches 2 betragen in den Figuren 4a bis 4d weniger als 0.80.

In Figur 5a hat der Abstandhalter eine quadratische Querschnittsfläche. Dies kann beispielsweise in Abstandhalter 5 in Form eines Würfels oder Zylinders realisiert werden. In einer weniger bevorzugten Variante davon ist die Querschnittsfläche des Abstandhalters 5 ein Rechteck, welche sich durch eine Abstandhalterform eines Quaders oder Zylinders realisieren lassen. In Figur 5b hat der Abstandhalter eine trapezoide Querschnittsfläche. Dies kann beispielsweise in Abstandhalter 5 in Form einem Pyramiden- oder einem Kegelstumpf realisiert werden. In Figur 5c hat der Abstandhalter eine dreieckige Querschnittsfläche. Dies kann beispielsweise in Abstandhalter 5 in Form einer Pyramide oder einem Kegel realisiert werden. In Figur 5d hat der Abstandhalter eine Querschnittsfläche eines Sterns als Beispiels für eine Polyeder-Querschnittsfläche. Dies kann beispielsweise in Abstandhalter 5 in mit Spitzen versehenen Kugeln realisiert werden. Die Ausführungsformen der Figuren 5c und 5d weisen Spitzen, welche senkrecht zum Innenblech 3 stehen, auf. Diese Spitzen erzeugen hohe Kräfte auf das Innenblech bei der Verpressung, so dass hier die Gefahr besteht, dass es sich an dieser Stelle verformen kann. Eine derartige Verformung ist vielfach von aussen sichtbar. Da eine derartige Verformung bzw. Abzeichnung meist nicht akzeptiert werden kann, sind die Ausführungsformen der Figuren 5c und 5d weniger bevorzugt.

### Bezugszeichenliste

| | | | |
|---|---|---|---|
| 1 | Bördelfalz | 8 | Kante des Aussenblechs 2 |
| 1' | Bördelfalz-Klebverbundkörper | 9 | Bördelfalznaht |
| 2 | Aussenblech | 10 | Dichtstoff |
| 3 | Innenblech | 11 | Innenraum des Bördelfalzes 1 |
| 4 | Klebstoff | dₓ | Klebstoffschichtdicke |
| 5 | Abstandhalter | d_{y} | Dicke des Abstandhalters 5 |
| 6 | nicht gebogene Innenflanke des Aussenbleches 2 | d_{z} | Dicke des Aussenbleches 2 |
| 7 | Kante des Innenblechs 6 | Δ | Thermische Energie |

### Beispiele

SikaPower®-496/3 ist ein bei Sika Automotive GmbH kommerziell erhältlicher hitzehärtender einkomponentiger Epoxidharzklebstoff. Dieser als *K1* bezeichnete Klebstoff weist bei 25°C eine Viskosität von ca. 2700 Pas und bei 60°C von ca. 100 Pas auf.

Die Viskosität wurde oszillographisch mittels eines Rheometers mit beheizbarer Platte (CVO 120 HR, Firma Bohlin) gemessen (Spalt 1000 µm, Mess-Plattendurchmesser: 25 mm (Platte/Platte), Deformation 0.01 bei 5 Hz, Temperatur: 20°C-70°C, Aufheizrate 10°C/min).

Es wurde ein weiterer hitzehärtender einkomponentiger Epoxidharzklebstoff hergestellt indem zu SikaPower®-496/3 2 Vol-% an Glaskugeln des Durchmessers 0.25 mm unter Rühren und anschliessendem evakuieren zugegeben wurden. Dieser als ***K2*** bezeichnete Klebstoff weist bei 25°C eine Viskosität von ca. 2800 Pas und bei 60°C von ca. 104 Pas auf.

Der als ***R1*** bezeichnete SikaPower®-490B3 stellt einen Vergleichsklebstoff dar, welcher bei Sika Automotive GmbH kommerziell erhältlich ist und ebenfalls ein hitzehärtender einkomponentiger Epoxidharzklebstoff ist. Er weist bei 25°C eine Viskosität von ca. 350 Pas und bei 60°C von 30 Pas auf.

Als Substrat wurde jeweils elektrolytisch verzinktes Stahlblech (DC-04+ZE75-75AO) (Dicke 0.8 mm) ("Blech") verwendet, welches vorgängig mittels Aceton gereinigt wurde und mit 3 g/m² Standardöl (3802-39S (Firma Fuchs)) beölt wurde.

Die Klebstoffe wurden auf ein elektrolytisch verzinktes Stahlblech (DC-04+ZE75-75AO) (Dicke 0.8 mm) bei 50-60°C als Rundraupe aufgetragen und ein weiteres Blech (Dicke 0.8 mm) aufgelegt und gebördelt. Auf den Bördelfalz wurde der jeweils gleiche Klebstoff als Dichtstoff aufgetragen und während 25 min bei 175°C ausgehärtet.

Der so gebildete Bördelfalz wurde mittels Blechschere in der Mitte geteilt und die Schnittfläche begutachtet. Die Blasenbildung im Bördelfalz sowie Dichtstoff wurde qualitativ beurteilt und in Tabelle 1 wiedergegeben.

In einer zweiten Versuchsreihe wurde je 0.3 g des jeweiligen Klebstoffs bei 50-60°C auf ein derartiges elektrolytisch verzinktes Stahlblech (50 mm x 50 mm x 0.8 mm) aufgetragen. In jeder Ecke wurde ein Gummi der Dicke 0.2 mm zur Simulation des Rückfederns angebracht. Daraufhin wurde ein gleiches Blech (50 mm x 50 mm x 0.8 mm) auf den Klebstoff gegeben und mittels einer Druckpresse mit einem Druck von 8 t / 25 cm² verpresst. Anschliessend wurde dieser Verbund während 25 min bei 175°C in einem Umluftofen ausgehärtet. Anschliessend wurde der Sandwich-Klebverbund mittels Keil aufgeteilt und das Bruchbild qualitativ beurteilt, welches in Tabelle 1 wiedergegeben.

**Tabelle 1. Visuelle Beurteilung**

| | Luftblasenbildung im Bördelfalz | Luftblasenbildung im Dichtstoff | Meanderbildung im Sandwich-Verbund |
|---|---|---|---|
| *K1* | kleine Bläschen | kleine Bläschen | einige kleine Meander im Randbereich |
| ***K2*** | keine Blasen | keine Blasen | kleinste Meander im Randbereich |
| ***R1*** | einige Bläschen | einige Bläschen | grosse Meander vollflächig |

## Patentansprüche

1. Verfahren zur Herstellung einer Bördelfalzverklebung umfassend mindestens die Schritte
a) Applikation eines Klebstoffes (4),
welcher bei 25°C eine Viskosität von > 900 Pas, insbesondere >1000 Pas, bevorzugt zwischen 1000 Pas und 4000 Pas, meist bevorzugt zwischen 1000 Pas und 3000 Pas, aufweist,
wobei die Viskosität oszillographisch mittels eines Rheometers mit beheizbarer Platte (CVO 120 HR, Firma Bohlin) (Spalt 1000 µm, Mess-Plattendurchmesser: 25 mm (Platte/Platte), Deformation 0.01 bei 5 Hz, Temperatur: 25°C); bestimmt wird;
auf ein Innenblech (3) oder auf ein Aussenblech (2);
b) Kontaktieren des Klebstoffes (4) mit dem Innenblech (3) oder dem Aussenblech (2);
c) Bördeln des Aussenbleches (2) um das Innenblech (3), so dass im Innenraum (11) des Bördelfalzes (1) Klebstoff (4) vorhanden ist;
d) Verpressen des Bördelfalzes (1);
e) Einführen thermischer Energie in den Klebstoff (4).

2. Verfahren gemäss Anspruch 1, **dadurch gekennzeichnet, dass** anschliessend an Schritt e) ein Schritt f) des Vernetzens des Klebstoffes (4) erfolgt.

3. Verfahren gemäss Anspruch 1 oder 2, **dadurch gekennzeichnet, dass** der Klebstoff (4) ein hitzehärtender einkomponentiger Epoxidharzklebstoff ist.

4. Verfahren gemäss Anspruch 3, **dadurch gekennzeichnet, dass** der hitzehärtende einkomponentige Epoxidharzklebstoff
- mindestens ein Epoxidharz **A** mit durchschnittlich mehr als einer Epoxidgruppe pro Molekül;
- mindestens einen Härter **B** für Epoxidharze, welcher durch erhöhte Temperatur aktiviert wird;
- mindestens ein endständig blockiertes Polyurethanprepolymer der Formel (I) umfasst; 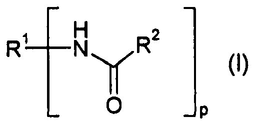
wobei R¹ für einen p-wertigen Rest eines mit Isocyanatgruppen terminierten linearen oder verzweigten Polyurethanprepolymers **PU1** nach dem Entfernen der endständigen Isocyanatgruppen steht;
p für einen Wert von 2 bis 8 stehen; und
R² unabhängig voneinander für einen Substituenten steht, welcher ausgewählt ist aus der Gruppe bestehend aus 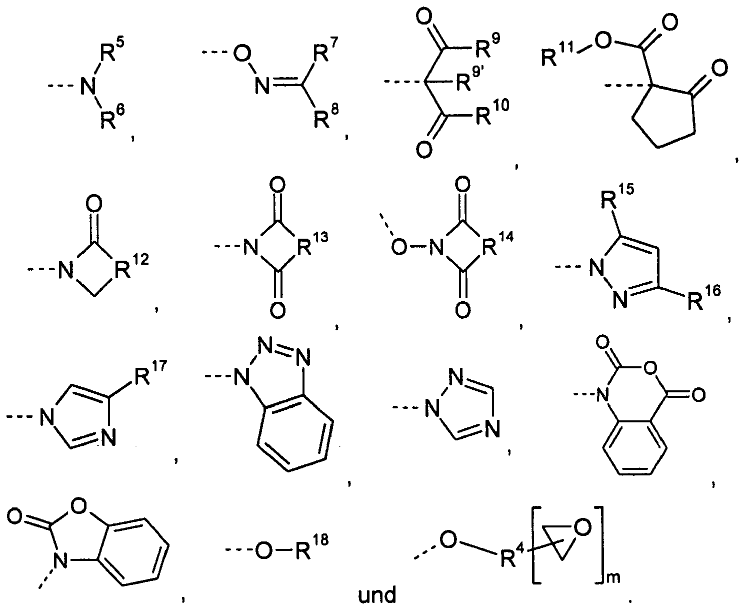 wobei
R⁵, R⁶, R⁷ und R⁸ je unabhängig voneinander für eine Alkyl- oder Cycloalkyl- oder Aralkyl- oder Arylalkyl-Gruppe steht oder R⁵ zusammen mit R⁶, oder R⁷ zusammen mit R⁸, einen Teil eines 4- bis 7-gliedrigen Rings bilden, welcher allenfalls substituiert ist;
R⁹, R^{9'} und R¹⁰ je unabhängig voneinander für eine Alkyl- oder Aralkyl-oder Arylalkyl-Gruppe oder für eine Alkyloxy- oder Aryloxy- oder Aralkyloxy-Gruppe steht;
R¹¹ für eine Alkylgruppe steht,
R¹², R¹³ und R¹⁴ je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe stehen;
R¹⁵, R¹⁶ und R¹⁷ je unabhängig voneinander für H oder für eine Alkylgruppe oder für eine Arylgruppe oder eine Aralkylgruppe stehen; und R¹⁸ für eine Aralkylgruppe oder für eine ein- oder mehrkernige substituierte oder unsubstituierte Aromatengruppe steht, welche gegebenenfalls aromatische Hydroxylgruppen aufweist;
R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen steht;
und m für einen Wert von 1, 2 oder 3 steht.

5. Verfahren gemäss Anspruch 1 oder 2, **dadurch gekennzeichnet, dass** der Klebstoff (4) ein bei Raumtemperatur härtender oder vorverhärtender zweikomponentiger Epoxidharzklebstoff oder Polyurethanklebstoff oder (Meth)acrylatklebstoff ist.

6. Verfahren gemäss einem der vorhergehenden Ansprüche, **dadurch gekennzeichnet, dass** anschliessend an Schritt d) oder an Schritt e) ein Schritt g) des Abdichtens der Bördelfalznaht (9) mittels eines Dichtstoffes (10) erfolgt.

7. Verfahren gemäss Anspruch 6, **dadurch gekennzeichnet, dass** nach dem Schritt g) ein weiterer Schritt (h) des Einführens thermischer Energie in den Dichtstoff (10) erfolgt.

8. Verfahren gemäss Anspruch 6 oder 7, **dadurch gekennzeichnet, dass** der Dichtstoff mittels UV-Strahlung vorverhärtet, bzw. ausgehärtet, wird.

9. Verfahren gemäss einem der Ansprüche 6 oder 7, **dadurch gekennzeichnet, dass** der Dichtstoff (10) ein bei Raumtemperatur härtender oder vorverhärtender zweikomponentiger Epoxidharzdichtstoff oder Polyurethandichtstoff oder (Meth)acrylatdichtstoff oder vulkanisierbarer Kautschukdichtstoff ist.

10. Verfahren gemäss einem der vorhergehenden Ansprüche, **dadurch gekennzeichnet, dass** das die thermische Energie in den Klebstoff über Infrarotstrahlung oder Induktionsheizung eingebracht wird.

11. Verfahren gemäss einem der vorhergehenden Ansprüche, **dadurch gekennzeichnet, dass** der Klebstoff (4) einen Abstandhalter (5) enthält.

12. Verfahren gemäss Anspruch 11, **dadurch gekennzeichnet, dass** im Schritt d) der Bördelfalz auf eine Klebstoffschichtdicke (dₓ), welcher der Dicke (d_{y}) des Abstandhalters (5) entspricht, verpresst wird.

13. Verfahren gemäss Anspruch 11 oder 12, **dadurch gekennzeichnet, dass** das Verhältnis der Dicke (d_{y}) des Abstandhalters (5) zur Dicke (d_{z}) des Aussenbleches (2) einen Wert von 0.05 - 0.80 beträgt.

14. Verfahren gemäss einem der Ansprüche 11 bis 13, **dadurch gekennzeichnet, dass** der Abstandhalter (5) eine kugelige Form, insbesondere eine Kugelform, aufweist.

15. Verfahren gemäss einem der Ansprüche 11 bis 14, **dadurch gekennzeichnet, dass** der Abstandhalter (5) aus einem Material gefertigt ist, welches eine Härte nach der Mohs-Härteskala von grösser als 5, bevorzugt grösser als 6, insbesondere grösser als 7, aufweist.

16. Verfahren gemäss einem der Ansprüche 11 bis 15, **dadurch gekennzeichnet, dass** der Abstandhalter (5) aus Glas, Keramik, Metall, Metalllegierung, Aluminumoxid, Siliziumdioxid, Zirkoniumoxid, Nitrid, insbesondere Bornitrid, oder Carbid, insbesondere Siliziumcarbid, ist.

17. Verwendung eines Verfahrens zur Herstellung von Bördelfalzverklebungen gemäss einem der Ansprüche 1 bis 16 in der Herstellung von Transportmitteln, insbesondere von Automobilen, Bussen, Lastkraftwagen, Schienenfahrzeugen, Schiffen oder Luftfahrzeugen, oder Weisswaren, insbesondere Waschmaschinen, Tumbler oder Geschirrspülern.

18. Bördelfalz-Klebverbundkörper (1') aufweisend ein gebördeltes Aussenblech (2), ein Innenblech (3) und einen Klebstoff (4), wie er in einem Verfahren gemäss einem der Ansprüche 1 bis 16 beschrieben ist, der zwischen der nicht gebogenen Innenflanke (6) des Aussenbleches (2) und dem Innenblech (3) angeordnet ist und welcher vernetzt ist.

19. Bördelfalz-Klebverbundkörper (1') gemäss Anspruch 18, **dadurch gekennzeichnet, dass** der Klebstoff (4) Abstandhalter (5) der Abstandhalterdicke (d_{y}), welche zwischen der nicht gebogenen Innenflanke (6) des Aussenbleches (2) und dem Innenblech (3) eingelagert sind, aufweist.

20. Bördelfalz-Klebverbundkörper (1') gemäss Anspruch 18 oder 19, **dadurch gekennzeichnet, dass** die Kante (7) des Innenbleches (3) im Bördelfalz (1) vollständig von Klebstoff (4) umgeben ist.

21. Bördelfalz-Klebverbundkörper (1') gemäss einem der Ansprüche 18 bis 20, **dadurch gekennzeichnet, dass** die Bördelfalznaht (9), welche von der Kante (8) des Aussenblechs (2) und dem Innenblech (3) gebildet wird, mittels eines Dichtstoffes (10) abgedichtet ist.

22. Bördelfalz-Klebverbundkörper gemäss einem der Ansprüche 18 bis 21, **dadurch gekennzeichnet, dass** er ein Transportmittel, insbesondere ein Automobil, Bus, Lastkraftwagen, Schienenfahrzeug, ein Schiff oder ein Luftfahrzeug ist, oder eine Weissware, insbesondere eine Waschmaschine, Tumbler oder Geschirrspüler, ist.

## Claims

1. Process for producing a hem flange adhesive bond, comprising at least the steps of
a) applying an adhesive (4)
which has a viscosity at 25°C of > 900 Pas, especially > 1000 Pas, preferably between 1000 Pas and 4000 Pas, most preferably between 1000 Pas and 3000 Pas,
the viscosity being determined by oscillographic methods by means of a rheometer with a heatable plate (CVO 120 HR, from Bohlin) (gap 1000 µm, measurement plate diameter: 25 mm (plate/plate), deformation 0.01 at 5 Hz, temperature: 25°C);
to an inner panel (3) or to an outer panel (2);
b) contacting the adhesive (4) with the inner panel (3) or the outer panel (2);
c) flanging the outer panel (2) around the inner panel (3) such that adhesive (4) is present in the interior (11) of the hem flange (1);
d) pressing the hem flange (1);
e) introducing thermal energy into the adhesive (4).

2. Process according to Claim 1, **characterized in that** step e) is followed by a step f) of crosslinking the adhesive (4).

3. Process according to Claim 1 or 2, **characterized in that** the adhesive (4) is a heat-curing one-component epoxy resin adhesive.

4. Process according to Claim 3, **characterized in that** the heat-curing one-component epoxy resin adhesive comprises
- at least one epoxy resin **A** with an average of more than one epoxy group per molecule;
- at least one hardener **B** for epoxy resins which is activated by elevated temperature;
- at least one terminally capped polyurethane prepolymer of the formula (I); 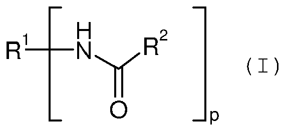
where R¹ is a p-valent radical of an isocyanate-terminated linear or branched polyurethane prepolymer **PU1** after the removal of the terminal isocyanate groups;
p is from 2 to 8; and
R² is independently a substituent which is selected from the group consisting of 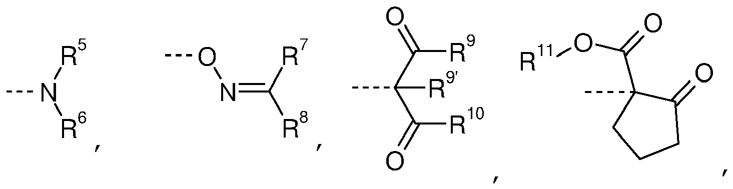 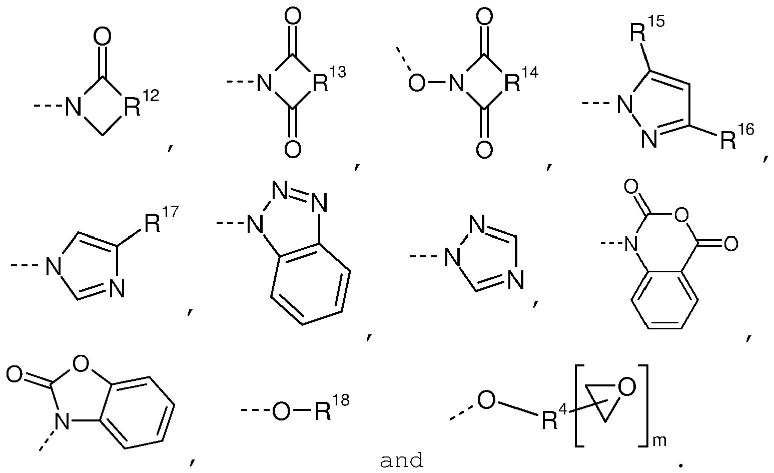 where
R⁵, R⁶, R⁷ and R⁸ are each independently an alkyl or cycloalkyl or aralkyl or arylalkyl group or R⁵ together with R⁶, or R⁷ together with R⁸, form part of a 4- to 7-membered ring which is at most substituted;
R⁹, R^{9'} and R¹⁰ are each independently an alkyl or aralkyl or arylalkyl group, or an alkyloxy or aryloxy or aralkyloxy group;
R¹¹ is an alkyl group,
R¹², R¹³ and R¹⁴ are each independently an alkylene group which has 2 to 5 carbon atoms and optionally has double bonds or is substituted, or a phenylene group or a hydrogenated phenylene group;
R¹⁵, R¹⁶ and R¹⁷ are each independently H or an alkyl group or an aryl group or aralkyl group; and
R¹⁸ is an aralkyl group or a mono- or polycyclic, substituted or unsubstituted aromatic group which optionally has aromatic hydroxyl groups;
R⁴ is a radical of an aliphatic, cycloaliphatic, aromatic or araliphatic epoxide containing a primary or secondary hydroxyl group after the removal of the hydroxide and epoxy groups;
and m is 1, 2 or 3.

5. Process according to Claim 1 or 2, **characterized in that** the adhesive (4) is a room temperature curing or precuring two-component epoxy resin adhesive or polyurethane adhesive or (meth)acrylate adhesive.

6. Process according to any one of the preceding claims, **characterized in that** step d) or step e) is followed by a step g) of sealing the hem flange (9) by means of a sealant (10).

7. Process according to Claim 6, **characterized in that** step g) is followed by a further step (h) of introducing thermal energy into the sealant (10).

8. Process according to Claim 6 or 7, **characterized in that** the sealant is precured or hardened by means of UV radiation.

9. Process according to either of Claims 6 and 7, **characterized in that** the sealant (10) is a room temperature curing or precuring two-component epoxy resin sealant or polyurethane sealant or (meth)acrylate sealant or vulcanizable rubber sealant.

10. Process according to any one of the preceding claims, **characterized in that** the thermal energy is introduced into the adhesive by means of infrared radiation or induction heating.

11. Process according to any one of the preceding claims, **characterized in that** the adhesive (4) contains a spacer (5).

12. Process according to Claim 11, **characterized in that** the hem flange is pressed in step d) to an adhesive layer thickness (dₓ) which corresponds to the thickness (d_{y}) of the spacer (5).

13. Process according to Claim 11 or 12, **characterized in that** the ratio of the thickness (d_{y}) of the spacer (5) to the thickness (d_{z}) of the outer panel (2) is 0.05-0.80.

14. Process according to any one of Claims 11 to 13, **characterized in that** the spacer (5) has a spheroidal shape, especially a spherical shape.

15. Process according to any one of Claims 11 to 14, **characterized in that** the spacer (5) is manufactured from a material which has a hardness by the Mohs hardness scale of greater than 5, preferably greater than 6, especially greater than 7.

16. Process according to any one of Claims 11 to 15, **characterized in that** the spacer (5) is composed of glass, ceramic, metal, metal alloy, aluminum oxide, silicon dioxide, zirconium oxide, nitride, especially boron nitride, or carbide, especially silicon carbide.

17. Use of a process for producing hem flange adhesive bonds according to any one of Claims 1 to 16 in the manufacture of modes of transport, especially of automobiles, buses, trucks, rail vehicles, ships or aircraft, or white goods, especially washing machines, tumble dryers or dishwashers.

18. Hem flange adhesive bonded assembly (1') comprising a flanged outer panel (2), an inner panel (3) and an adhesive (4), as described in a process according to any one of Claims 1 to 16, which is arranged between the unbent inner flank (6) of the outer panel (2) and the inner panel (3) and which is crosslinked.

19. Hem flange adhesive bonded assembly (1') according to Claim 18, **characterized in that** the adhesive (4) comprises spacers (5) of spacer thickness (d_{y}) which are incorporated between the unbent inner flank (6) of the outer panel (2) and the inner panel (3).

20. Hem flange adhesive bonded assembly (1') according to Claim 18 or 19, **characterized in that** the edge (7) of the inner panel (3) is completely surrounded by adhesive (4) in the hem flange (1).

21. Hem flange adhesive bonded assembly (1') according to any one of Claims 18 to 20, **characterized in that** the hem flange seam (9) formed by the edge (8) of the outer panel (2) and the inner panel (3) is sealed by means of a sealant (10).

22. Hem flange adhesive bonded assembly according to any one of Claims 18 to 21, **characterized in that** it is a mode of transport, especially an automobile, bus, truck, rail vehicle, a ship or an aircraft, or a white good, especially a washing machine, tumble dryer or dishwasher.

## Revendications

1. Procédé pour la réalisation d'un collage d'un pli de sertissage, comprenant au moins les étapes de
a) application d'un adhésif (4),
- qui présente, à 25°C, une viscosité > 900 Pa.s, en particulier > 1000 Pa.s, de préférence entre 1000 Pa.s et 4000 Pa.s, le plus préférablement entre 1000 Pa.s et 3000 Pa.s,
- la viscosité étant déterminée par oscillographie au moyen d'un rhéomètre présentant une plaque pouvant être chauffée (CVO 120 HR, société Bohlin) (fente 1000 µm, diamètre de la plaque de mesure : 25 mm (plaque/plaque), déformation 0,01 à 5 Hz, température : 25°C),
sur une tôle interne (3) ou une tôle externe (2) ;
b) mise en contact de l'adhésif (4) et de la tôle interne (3) ou la tôle externe (2) ;
c) sertissage de la tôle externe (2) autour de la tôle interne (3), de manière telle que l'adhésif (4) se trouve dans l'espace interne (11) du pli de sertissage (1) ;
d) pressage du pli de sertissage (1) ;
e) introduction d'énergie thermique dans l'adhésif (4).

2. Procédé selon la revendication 1, **caractérisé en ce qu'**une étape f) de réticulation de l'adhésif (4) a lieu après l'étape e).

3. Procédé selon la revendication 1 ou 2, **caractérisé en ce que** l'adhésif (4) est un adhésif à base de résine époxyde à un composant, thermodurcissable.

4. Procédé selon la revendication 3, **caractérisé en ce que** l'adhésif à base de résine époxyde à un composant, thermodurcissable,
- comprend au moins une résine époxyde A comprenant en moyenne plus d'un groupe époxyde par molécule ;
- au moins un durcisseur B pour résines époxydes, qui est activé par une température élevée ;
- au moins un prépolymère de polyuréthane bloqué en position terminale de formule (I) ; 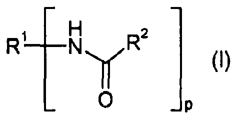
où R¹ représente un radical p-valent d'un prépolymère de polyuréthane **PU1** linéaire ou ramifié terminé par des groupes isocyanate après l'élimination des groupes isocyanate en position terminale ;
p représente une valeur de 2 à 8 et
R² représente indépendamment l'un de l'autre un substituant, qui est choisi dans le groupe constitué par 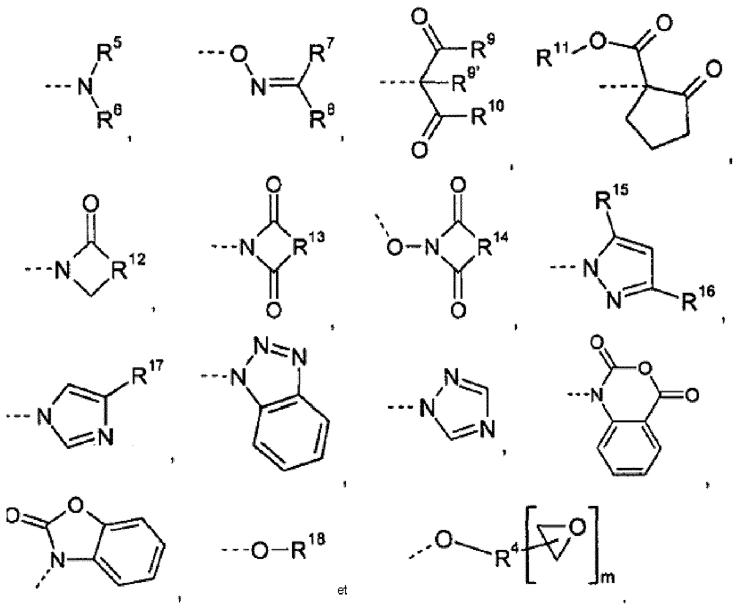
où
R⁵, R⁶, R⁷ et R⁸ représentent chacun, indépendamment l'un de l'autre, un groupe alkyle ou cycloalkyle ou aralkyle ou arylalkyle
- ou R⁵ ensemble avec R⁶, ou R⁷ ensemble avec R⁸, forment une partie d'un cycle de 4 à 7 chaînons, qui est le cas échéant substitué ;
R⁹, R^{9'} et R¹⁰ représentent chacun, indépendamment l'un de l'autre, un groupe alkyle ou aralkyle ou arylalkyle ou un groupe alkyloxy ou aryloxy ou aralkyloxy ;
R¹¹ représente un groupe alkyle,
R¹², R¹³ et R¹⁴ représentent chacun, indépendamment l'un de l'autre, un groupe alkylène comprenant 2 à 5 atomes de carbone qui présente le cas échéant des doubles liaisons ou qui est le cas échéant substitué, ou un groupe phénylène ou un groupe phénylène hydrogéné ;
R¹⁵, R¹⁶ et R¹⁷ représentent chacun, indépendamment l'un de l'autre, H ou un groupe alkyle ou un groupe aryle ou un groupe aralkyle ; et
R¹⁸ représente un groupe aralkyle ou un groupe aromatique à un ou plusieurs noyaux, substitué ou non substitué, qui présente le cas échéant des groupes hydroxyle aromatiques ;
R⁴ représente un radical d'un époxyde, contenant un groupe hydroxyle primaire ou secondaire, aliphatique, cycloaliphatique, aromatique ou araliphatique après l'élimination des groupes hydroxyde et époxyde ; et
m vaut une valeur de 1, 2 ou 3.

5. Procédé selon la revendication 1 ou 2, **caractérisé en ce que** l'adhésif (4) est un adhésif à base de résine époxyde ou à base de polyuréthane ou à base de (méth)acrylate à deux composants, durcissant ou prédurcissant à température ambiante.

6. Procédé selon l'une quelconque des revendications précédentes, **caractérisé en ce qu'**après l'étape d) ou après l'étape e) a lieu une étape g) de bouchage du joint (9) du pli de sertissage au moyen d'une substance d'étanchéité (10).

7. Procédé selon la revendication 6, **caractérisé en ce qu'**après l'étape g) a lieu une autre étape h) d'introduction d'énergie thermique dans la substance d'étanchéité (10).

8. Procédé selon la revendication 6 ou 7, **caractérisé en ce que** la substance d'étanchéité est prédurcie ou, selon le cas, durcie par un rayonnement UV.

9. Procédé selon l'une quelconque des revendications 6 ou 7, **caractérisé en ce que** la substance d'étanchéité (10) est une substance d'étanchéité à base de résine époxyde, à base de polyuréthane ou à base de (méth)acrylate à deux composants, durcissant ou prédurcissant à température ambiante, ou une substance d'étanchéité à base de caoutchouc vulcanisable.

10. Procédé selon l'une quelconque des revendications précédentes, **caractérisé en ce que** l'énergie thermique est introduite dans l'adhésif via un rayonnement infrarouge ou un chauffage par induction.

11. Procédé selon l'une quelconque des revendications précédentes, **caractérisé en ce que** l'adhésif (4) contient un écarteur (5).

12. Procédé selon la revendication 11, **caractérisé en ce que** dans l'étape d), le pli de sertissage est pressé sur une épaisseur de couche d'adhésif (dₓ) qui correspond à l'épaisseur (d_{y}) de l'écarteur (5).

13. Procédé selon la revendication 11 ou 12, **caractérisé en ce que** le rapport de l'épaisseur (d_{y}) de l'écarteur (5) à l'épaisseur (d_{z}) de la tôle externe (2) vaut une valeur de 0,05-0,80.

14. Procédé selon l'une quelconque des revendications 11 à 13, **caractérisé en ce que** l'écarteur (5) présente une forme sphérique, en particulier une forme de bille.

15. Procédé selon l'une quelconque des revendications 11 à 14, **caractérisé en ce que** l'écarteur (5) est réalisé en un matériau qui présente une dureté selon l'échelle de dureté de Mohs supérieure à 5, de préférence supérieure à 6, en particulier supérieure à 7.

16. Procédé selon l'une quelconque des revendications 11 à 15, **caractérisé en ce que** l'écarteur (5) est en verre, en céramique, en métal, en alliage de métal, en oxyde d'aluminium, en dioxyde de silicium, en oxyde de zirconium, en nitrure, en particulier en nitrure de bore, ou en carbure, en particulier en carbure de silicium.

17. Utilisation d'un procédé pour la réalisation de collages de plis de sertissage selon l'une quelconque des revendications 1 à 16 dans la fabrication de moyens de transport, en particulier d'automobiles, de bus, de camions, de trains, de bateaux ou d'avions, ou d'appareils électroménagers, en particulier des lave-linge, des séchoirs à tambour tournant ou des lave-vaisselle.

18. Corps composite pli de sertissage-adhésif (1') présentant une tôle externe sertie (2), une tôle interne (3) et un adhésif (4), tel qu'il est décrit dans un procédé selon l'une quelconque des revendications 1 à 16, qui est disposé entre le flanc interne (6) non plié de la tôle externe (2) et la tôle interne (3) et qui est réticulé.

19. Corps composite pli de sertissage-adhésif (1') selon la revendication 18, **caractérisé en ce que** l'adhésif (4) présente des écarteurs (5) présentant une épaisseur d'écarteur (d_{y}), qui sont incorporés entre le flanc interne (6) non plié de la tôle externe (2) et la tôle interne (3).

20. Corps composite pli de sertissage-adhésif (1') selon la revendication 18 ou 19, **caractérisé en ce que** le bord (7) de la tôle interne (3) dans le pli de sertissage (1) est complètement entouré d'adhésif (4).

21. Corps composite pli de sertissage-adhésif (1') selon l'une quelconque des revendications 18 à 20, **caractérisé en ce que** le joint (9) du pli de sertissage, qui est formé par le bord (8) de la tôle externe (2) et la tôle interne (3), est bouché au moyen d'une substance d'étanchéité (10).

22. Corps composite pli de sertissage-adhésif selon l'une quelconque des revendications 18 à 21, **caractérisé en ce qu'**il s'agit d'un moyen de transport, en particulier une automobile, un bus, un camion, un train, un bateau ou un avion, ou d'un appareil électroménager, en particulier un lave-linge, un séchoir à tambour tournant ou un lave-vaisselle.
